# EUROPEAN PATENT APPLICATION

(11) **EP 4 626 128 A1**
(43) Date of publication of application: **01.10.2025**
(21) Application number: 23915397.6
(22) Date of filing: 13.01.2023
(51) Int. Cl.: H04W 76/10

(54) **LINK ESTABLISHMENT METHOD AND APPARATUS, AND STORAGE MEDIUM**

(71) Applicant: Huawei Technologies Co., Ltd., Shenzhen, Guangdong 518129 (CN)
(72) Inventor: XUE, Wan, Shenzhen, Guangdong 518129 (CN)
(74) Representative: Maiwald GmbH
(86) International application number: PCT/CN2023/072203
(87) International publication number: WO 2024/148628

(57) **Abstract**

This application provides a link establishment method, an apparatus, and a storage medium. The method includes: A second device receives a first packet, and creates virtual local area network interface information based on the first packet; and the second device generates address information of the second device, and sends first information to a first device, where the first information corresponds to the virtual local area network interface information, and the first information is used to generate first address information of the first device, or the first information includes the first address information. In the foregoing solution, the address information of the device does not need to be manually configured, so that the device automatically configures the virtual local area network interface information, providing data support for link establishment.

## Description

### TECHNICAL FIELD

This application relates to the field of communication technologies, and in particular, to a link establishment method, an apparatus, and a storage medium.

### BACKGROUND

Currently, transmission-related parameters, for example, a virtual local area network (virtual local area network, VLAN) interface information, an internet protocol (internet protocol, IP) address, and a route, of a network device in a link of a communication system, are mainly manually configured by operation and maintenance personnel. For example, parameters of a control & manager (control & manager, C&M) plane, a service plane, and a clock plane of a baseband unit (baseband unit, BBU) or a radio unit (radio unit, RU) in the link are configured. If the link of the communication system needs to be adjusted, configuration of the BBU or the RU needs to be separately modified again, and the operation is complex.

### SUMMARY

This application provides a link establishment method, an apparatus, and a storage medium, so that a network device in a link automatically generates a transmission-related configuration parameter, providing data support for automatic link establishment of the device.

A first aspect of this application provides a link establishment method, applicable to a communication system using layer 2 (layer 2, L2) networking. The method includes: receiving a first packet; creating virtual local area network interface information based on the first packet, where the virtual local area network interface information corresponds to first information, and the first information is used to generate first address information of a first device, or the first information includes the first address information; and generating second address information, where the second address information corresponds to the virtual local area network interface information.

In the foregoing solution, the device creates a virtual local area network interface based on the received first packet, and generates an address corresponding to the virtual local area network interface, without manually configuring the address information of the device, so that the device automatically configures the virtual local area network interface information, providing data support for link establishment.

In an optional embodiment of the first aspect, the first packet is a link layer discovery protocol packet.

In the foregoing solution, the device receives the link layer discovery protocol packet, so that the virtual local area network interface is created based on the packet.

In an optional embodiment of the first aspect, the first packet includes an identifier of one virtual local area network interface or identifiers of a plurality of virtual local area network interfaces, and creating the virtual local area network interface information based on the first packet includes: creating, based on the identifier of the one virtual local area network interface in the first packet, the one virtual local area network interface on a physical ethernet port that receives the first packet; or creating, based on the identifiers of the plurality of virtual local area network interfac es in the first packet, the plurality of virtual local area network interfaces on a physical ethernet port that receives the first packet.

In the foregoing solution, the device creates the virtual local area network interface based on the identifier of the virtual local area network interface in the received first packet, and a quantity of identifiers of virtual local area network interfaces is the same as a quantity of created virtual local area network interfaces, so that the device automatically configures the one virtual local area network interface or the plurality of virtual local area network interfaces.

Optionally, the created virtual local area network interface may include a virtual local area network interface of a service plane, a virtual local area network interface of a management plane, and a virtual local area network interface of a clock plane. The plurality of virtual local area network interfaces are isolated from each other.

In an optional embodiment of the first aspect, the virtual local area network interface information includes one virtual local area network interface, and the second address information includes address information of the one virtual local area network interface; or the virtual local area network interface information includes a plurality of virtual local area network interfaces, and the second address information includes address information of the plurality of virtual local area network interfaces.

In the foregoing solution, the device generates the corresponding second address information based on the virtual local area network interface information, and the second address information includes the address information of the one virtual local area network interface created by the device or the address information of the plurality of virtual local area network interfaces created by the device, so that the device automatically generates the address information of the one virtual local area network interface or the address information of the plurality of virtual local area network interfaces, providing data support for link establishment.

In an optional embodiment of the first aspect, the method further includes: sending the first information to the first device on the created virtual local area network interface.

In the foregoing solution, the device sends the first information, so that a peer device (namely, the first device) generates address information of the peer device based on the first information, or directly obtains the address information of the peer device from the first information.

In an optional embodiment of the first aspect, the first information is used to generate the first address information of the first device, and sending the first information to the first device on the created virtual local area network interface includes: sending a router advertisement packet to the first device on the created virtual local area network interface, where the router advertisement packet includes the first information, and the first information includes network segment information.

In the foregoing solution, the device sends the first information by using the router advertisement packet, so that the peer device generates the address information of the peer device based on the router advertisement packet.

In an optional embodiment of the first aspect, before sending the router advertisement packet to the first device on the created virtual local area network interface, the method further includes: receiving a router solicitation packet on the created virtual local area network interface.

In the foregoing solution, the device sends the first information by using the router advertisement packet in response to the router solicitation packet of the peer device, so that the peer device can generate the address information of the peer device based on the router advertisement packet, and the peer device automatically generates the address information of the peer device.

In an optional embodiment of the first aspect, the first information includes the first address information, and sending the first information to the first device on the created virtual local area network interface includes: receiving a dynamic host configuration protocol request on the created virtual local area network interface; and sending a dynamic host configuration protocol response to the first device on the created virtual local area network interface, where the dynamic host configuration protocol response includes the first information.

In the foregoing solution, the device sends the first information by using the dynamic host configuration protocol response in response to the dynamic host configuration protocol request of the peer device, so that the peer device can obtain the address information of the peer device from the dynamic host configuration protocol response.

In an optional embodiment of the first aspect, the method further includes: sending an address of a service plane in the second address information to a network management device.

In the foregoing solution, after generating the second address information, the device reports the address of the service plane in the second address information to the network management device, so that the network management device notifies the peer device of the address of the service plane.

In an optional embodiment of the first aspect, the method further includes: receiving an address of a service plane in the first address information of the first device from the network management device.

In the foregoing solution, the device learns of the address of the service plane of the peer device through the network management device.

In an optional embodiment of the first aspect, the method further includes: establishing a link based on the address of the service plane in the second address information and the address of the service plane in the first address information of the first device.

In the foregoing solution, the device automatically establishes the link based on the address of the service plane of the device and the address, of the service plane of the peer device, that is learned from the network management device.

In an optional embodiment of the first aspect, the method further includes: sending the router solicitation packet for N times, where N is a positive integer; and if no router advertisement packet is received, generating the second address information.

In the foregoing solution, the device determines, by sending the router solicitation packet based on whether a response packet, namely, the router advertisement packet, of the packet is received, whether the device is an address allocation node. If the device does not receive the router advertisement packet, the device may autonomously generate the second address information.

In an optional embodiment of the first aspect, the method further includes: sending the dynamic host configuration protocol request for N times, where N is a positive integer; and if no dynamic host configuration protocol response is received, generating the second address information.

In the foregoing solution, the device determines, by sending the dynamic host configuration protocol request based on whether a response, namely, the dynamic host configuration protocol response, to the request is received, whether the device is the address allocation node. If the device does not receive the dynamic host configuration protocol response, the device may autonomously generate the address information of the device.

A second aspect of this application provides a link establishment method, applicable to a communication system using layer 2 (layer 2, L2) networking. The method includes: receiving a first packet; creating virtual local area network interface information based on the first packet; receiving first information based on the virtual local area network interface information; and generating first address information based on the first information, where the first address information corresponds to the virtual local area network interface information.

In the foregoing solution, the device generates, by receiving first information of a peer device on a created virtual local area network interface based on the first information, an address corresponding to the virtual local area network interface, without manually configuring the address information of the device, so that the device automatically configures the virtual local area network interface information, providing data support for link establishment.

In an optional embodiment of the second aspect, the first packet is a link layer discovery protocol packet.

In the foregoing solution, the device receives the link layer discovery protocol packet, so that the virtual local area network interface is created based on the packet.

In an optional embodiment of the second aspect, the first packet includes an identifier of one virtual local area network interface or identifiers of a plurality of virtual local area network interfaces, and creating the virtual local area network interface information based on the first packet includes: creating, based on the identifier of the one virtual local area network interface in the first packet, the one virtual local area network interface on a physical ethernet port that receives the first packet; or creating, based on the identifiers of the plurality of virtual local area network interfac es in the first packet, the plurality of virtual local area network interfaces on a physical ethernet port that receives the first packet.

In the foregoing solution, the device creates the virtual local area network interface based on the identifier of the virtual local area network interface in the received first packet, and a quantity of identifiers of virtual local area network interfaces is the same as a quantity of created virtual local area network interfaces, so that the device automatically configures the one virtual local area network interface or the plurality of virtual local area network interfaces.

In an optional embodiment of the second aspect, the virtual local area network interface information includes a first virtual local area network interface, the first virtual local area network interface is any interface in the virtual local area network interface information, and the first information includes first information corresponding to the first virtual local area network interface; receiving the first information based on the virtual local area network interface information includes: receiving the first information corresponding to the first virtual local area network on the first virtual local area network interface; and generating the first address information based on the first information includes: generating address information of the first virtual local area network interface in the first address information based on the first information corresponding to the first virtual local area network interface; or obtaining address information of the first virtual local area network interface from the first information corresponding to the first virtual local area network interface. Optionally, the method further includes: configuring an address in the address information of the first virtual local area network interface on the created first virtual local area network interface.

In the foregoing solution, after creating the one virtual local area network interface or the plurality of virtual local area network interfaces, the device receives the first information corresponding to the virtual local area network interface on the corresponding virtual local area network interface, to determine the address of the virtual local area network interface based on the first information corresponding to the virtual local area network interface, so that the device automatically generates the address of the one virtual local area network interface created by the device or the addresses of the plurality of virtual local area network interfaces created by the device, providing data support for link establishment.

In an optional embodiment of the second aspect, the virtual local area network interface information includes one virtual local area network interface, and the first address information includes address information of the one virtual local area network interface; or the virtual local area network interface information includes a plurality of virtual local area network interfaces, and the first address information includes address information of the plurality of virtual local area network interfaces.

In the foregoing solution, the device generates the corresponding first address information based on the virtual local area network interface information, and the first address information includes the address information of the one virtual local area network interface created by the device or the address information of the plurality of virtual local area network interfaces created by the device, so that the device automatically generates the address information of the one virtual local area network interface or the address information of the plurality of virtual local area network interfaces, providing data support for link establishment.

In an optional embodiment of the second aspect, receiving the first information based on the virtual local area network interface information includes: receiving a router advertisement packet on the created virtual local area network interface, where the router advertisement packet includes the first information, and the first information includes network segment information; and generating the first address information based on the first information includes: generating the first address information based on the network segment information in the first information.

Optionally, the address in the first address information is configured on the created virtual local area network interface.

In the foregoing solution, the device obtains the network segment information by receiving the router advertisement packet, and generates address information of the device based on the network segment information, so that the device automatically generates the address information of the device, providing data support for link establishment.

In an optional embodiment of the second aspect, before receiving the router advertisement packet on the created virtual local area network interface, the method further includes: sending a router solicitation packet on the created virtual local area network interface.

In the foregoing solution, the device actively initiates the router solicitation packet, so that the device obtains, by receiving the router advertisement packet of the peer device, the network segment information allocated by the peer device to the device.

In an optional embodiment of the second aspect, receiving the first information based on the virtual local area network interface information includes: sending a dynamic host configuration protocol request on the created virtual local area network interface; and receiving a dynamic host configuration protocol response on the created virtual local area network interface, where the dynamic host configuration protocol response includes the first information, and the first information includes the first address information; and generating the first address information based on the first information includes: obtaining the first address information from the first information in the dynamic host configuration protocol response.

Optionally, the address in the first address information is configured on the created virtual local area network interface.

In the foregoing solution, the device actively initiates the dynamic host configuration protocol request, so that the device obtains, by receiving the dynamic host configuration response of the peer device, the address information allocated by the peer device to the device.

In an optional embodiment of the second aspect, the method further includes: sending an address of a service plane in the first address information to a network management device.

In the foregoing solution, after generating the first address information, the device reports the address of the service plane in the first address information to the network management device, so that the network management device notifies the peer device of the address of the service plane.

In an optional embodiment of the second aspect, the method further includes: receiving an address of a service plane in second address information of a second device from the network management device.

In the foregoing solution, the device learns of the address of the service plane of the peer device through the network management device.

In an optional embodiment of the second aspect, the method further includes: establishing a link based on the address of the service plane in the first address information and the address of the service plane in the second address information of the second device.

In the foregoing solution, the device automatically establishes the link based on the address of the service plane of the device and the address, of the service plane of the peer device, that is learned from the network management device.

A third aspect of this application provides a link establishment method, applicable to a communication system using layer 3 (layer 3, L3) networking. The method includes: receiving a second packet; creating virtual local area network interface information based on the second packet; and generating third address information and routing information, where the third address information corresponds to the virtual local area network interface information.

In the foregoing solution, the device creates a virtual local area network interface based on the received second packet, and generates an address corresponding to the virtual local area network interface and a route, without manually configuring the address of the device and the route, so that the device automatically configures the address of the virtual local area network interface and the route, providing data support for link establishment.

In an optional embodiment of the third aspect, the second packet is a link layer discovery protocol packet, and the link layer discovery protocol packet includes an identifier of one virtual local area network interface or identifiers of a plurality of virtual local area network interfaces; and creating the virtual local area network interface information based on the second packet includes: creating, based on the identifier of the one virtual local area network interface in the link layer discovery protocol packet, the one virtual local area network interface on a physical ethernet port that receives the link layer discovery protocol packet; or creating, based on the identifiers of the plurality of virtual local area network interfaces in the link layer discovery protocol packet, the plurality of virtual local area network interfaces on a physical ethernet port that receives the link layer discovery protocol packet.

In the foregoing solution, the device creates, by receiving the link layer discovery protocol packet, the virtual local area network interface information based on the identifier of the virtual local area network interface in the packet, and a quantity of virtual local area network interfaces is the same as a quantity of identifiers of virtual local area network interfaces in the packet, so that the device automatically configures the one virtual local area network interface or the plurality of virtual local area network interfaces.

In an optional embodiment of the third aspect, the second packet is a router advertisement packet, and receiving the second packet includes: receiving one or more router advertisement packets, where a data link layer of the router advertisement packet carries an identifier of one virtual local area network interface; and creating the virtual local area network interface information based on the second packet includes: creating, based on the identifier of the one virtual local area network interface carried by the data link layer of the router advertisement packet, the one virtual local area network interface on a physical ethernet port that receives the router advertisement packet.

In the foregoing solution, the device creates, by receiving the one or more router advertisement packets, the virtual local area network interface information based on the identifier of the virtual local area network interface carried by the data link layer of the one or more router advertisement packets, and a quantity of virtual local area network interfaces is the same as a quantity of received router advertisement packets, so that the device automatically configures the one virtual local area network interface or the plurality of virtual local area network interfaces.

In an optional embodiment of the third aspect, the virtual local area network interface information includes one virtual local area network interface, and the third address information includes address information of the one virtual local area network interface; or the virtual local area network interface information includes a plurality of virtual local area network interfaces, and the third address information includes address information of the plurality of virtual local area network interfaces.

In the foregoing solution, the device generates the corresponding third address information based on the virtual local area network interface information, and the third address information includes the address information of the one virtual local area network interface created by the device or the address information of the plurality of virtual local area network interfaces created by the device, so that the device automatically generates the address information of the one virtual local area network interface or the address information of the plurality of virtual local area network interfaces, providing data support for link establishment.

In an optional embodiment of the third aspect, generating the third address information and the routing information includes: sending a dynamic host configuration protocol request to a third device on the created virtual local area network interface; receiving a dynamic host configuration protocol response on the created virtual local area network interface; obtaining the third address information from the dynamic host configuration protocol response; and using a default gateway address in the dynamic host configuration protocol response as a gateway address of the routing information.

Optionally, the method further includes: configuring an address in the third address information on the created virtual local area network interface.

In the foregoing solution, the device actively initiates the dynamic host configuration protocol request to the third device, and the third device is a network layer device (for example, a router), to obtain, by receiving the dynamic host configuration protocol response from the third device, the address information allocated by the third device to the device, and determine the gateway address in the routing information based on the dynamic host configuration protocol response.

In an optional embodiment of the third aspect, the second packet is the router advertisement packet, and generating the third address information and the routing information includes: generating the third address information based on the second packet; and generating the routing information based on the second packet.

In the foregoing solution, the device generates the address information and the routing information of the device by receiving the router advertisement packet.

In an optional embodiment of the third aspect, the second packet includes network segment information, and generating the third address information based on the second packet includes: generating the third address information based on the network segment information in the second packet, where the second packet may be a router advertisement packet.

In the foregoing solution, the device automatically generates the address information of the device by using the network segment information in the second packet.

Optionally, the method further includes: configuring an address in the third address information on the created virtual local area network interface.

In an optional embodiment of the third aspect, generating the routing information based on the second packet includes: using a source address of the second packet as a gateway address of the routing information, where the second packet may be a router advertisement packet.

In the foregoing solution, the device automatically generates, by receiving the second packet, the gateway address in the routing information based on the source address of the packet.

In an optional embodiment of the third aspect, before receiving the second packet, the method further includes: sending a router solicitation packet, where the second packet may be a router advertisement packet.

In the foregoing solution, the device actively initiates the router solicitation packet, to generate the address information and the routing information of the device by receiving the router advertisement packet.

In an optional embodiment of the third aspect, the method further includes: sending an address of a service plane in the third address information to a network management device.

In the foregoing solution, after generating the third address information, the device reports the address of the service plane in the third address information to the network management device, so that the network management device notifies a peer device of the address of the service plane.

In an optional embodiment of the third aspect, the method further includes: receiving an address of a service plane in fourth address information of a fourth device from the network management device.

In the foregoing solution, the device learns of the address of the service plane of the peer device through the network management device.

In an optional embodiment of the third aspect, the method further includes: establishing a link based on the address of the service plane in the third address information and the address of the service plane in the fourth address information of the fourth device.

In the foregoing solution, the device automatically establishes the link based on the address of the service plane of the device and the address, of the service plane of the peer device, that is learned from the network management device.

A fourth aspect of this application provides a link establishment method. The method includes: obtaining an address of a service plane of a first apparatus; and sending the address of the service plane of the first apparatus to a second apparatus, where there is a correspondence between the first apparatus and the second apparatus.

In the foregoing solution, the device sends the address of the service plane of the first apparatus corresponding to the second apparatus to the second apparatus, so that the second apparatus learns of the address of the service plane of the first apparatus corresponding to the second apparatus, providing data support for link establishment.

In an optional embodiment of the fourth aspect, the correspondence between the first apparatus and the second apparatus is preconfigured.

In an optional embodiment of the fourth aspect, obtaining the address of the service plane of the first apparatus includes: receiving the address of the service plane of the first apparatus from the first apparatus.

In the foregoing solution, the device obtains the address, of the service plane of the first apparatus, that is actively reported by the first apparatus.

In an optional embodiment of the fourth aspect, the method further includes: obtaining an address of a service plane of the second apparatus; and sending the address of the service plane of the second apparatus to the first apparatus.

In the foregoing solution, the device sends the address of the service plane of the second apparatus corresponding to the first apparatus to the first apparatus, so that the first apparatus learns of the address of the service plane of the second apparatus corresponding to the first apparatus, providing data support for link establishment.

In an optional embodiment of the fourth aspect, obtaining the address of the service plane of the second apparatus includes: receiving the address of the service plane of the second apparatus from the second apparatus.

In the foregoing solution, the device obtains the address, of the service plane of the second apparatus, that is actively reported by the second apparatus.

In an optional embodiment of the fourth aspect, the method further includes: obtaining configuration information of the first apparatus and configuration information of the second apparatus.

According to a fifth aspect, an embodiment of this application provides a link establishment method. The method includes: sending a first packet to an access network device, where the first packet is used by the access network device to create virtual local area network interface information; and the access network device may be an execution device in the first aspect, the second aspect, the third aspect, or the optional embodiments.

In the foregoing solution, the device sends the first packet, so that the device that receives the packet automatically creates a virtual local area network interface.

In an optional embodiment of the fifth aspect, the first packet includes a link layer discovery protocol packet or a router advertisement packet.

A sixth aspect of this application provides a communication apparatus. The communication apparatus includes: a transceiver module, configured to receive a first packet; and a processing module, configured to create virtual local area network interface information based on the first packet, where the virtual local area network interface information corresponds to first information, and the first information is used to generate first address information of a first device, or the first information includes the first address information, where the processing module is further configured to generate second address information, where the second address information corresponds to the virtual local area network interface information.

In an optional embodiment of the sixth aspect, the first packet is a link layer discovery protocol packet.

In an optional embodiment of the sixth aspect, the first packet includes an identifier of one virtual local area network interface or identifiers of a plurality of virtual local area network interfaces; and the processing module is configured to create, based on the identifier of the one virtual local area network interface in the first packet, the one virtual local area network interface on a physical ethernet port that receives the first packet; or create, based on the identifiers of the plurality of virtual local area network interfaces in the first packet, the plurality of virtual local area network interfaces on a physical ethernet port that receives the first packet.

In an optional embodiment of the sixth aspect, the virtual local area network interface information includes one virtual local area network interface, and the second address information includes address information of the one virtual local area network interface; or the virtual local area network interface information includes a plurality of virtual local area network interfaces, and the second address information includes address information of the plurality of virtual local area network interfaces.

In an optional embodiment of the sixth aspect, the transceiver module is further configured to send the first information to the first device on the created virtual local area network interface.

In an optional embodiment of the sixth aspect, the first information is used to generate the first address information of the first device, and the transceiver module is further configured to send a router advertisement packet to the first device on the created virtual local area network interface, where the router advertisement packet includes the first information, and the first information includes network segment information.

In an optional embodiment of the sixth aspect, before sending the router advertisement packet to the first device on the created virtual local area network interface, the transceiver module is further configured to receive a router solicitation packet on the created virtual local area network interface.

In an optional embodiment of the sixth aspect, the first information includes the first address information, and the transceiver module is configured to: receive a dynamic host configuration protocol request on the created virtual local area network interface; and send a dynamic host configuration protocol response to the first device on the created virtual local area network interface, where the dynamic host configuration protocol response includes the first information.

In an optional embodiment of the sixth aspect, the transceiver module is further configured to send an address of a service plane in the second address information to a network management device.

In an optional embodiment of the sixth aspect, the transceiver module is further configured to receive an address of a service plane in the first address information of the first device from the network management device.

In an optional embodiment of the sixth aspect, the processing module is further configured to establish a link based on the address of the service plane in the second address information and the address of the service plane in the first address information of the first device.

For beneficial effect of the sixth aspect and the optional embodiments of the sixth aspect, refer to the beneficial effect brought by the first aspect and the optional embodiments of the first aspect. Details are not described herein again.

A seventh aspect of this application provides a communication apparatus. The communication apparatus includes: a transceiver module, configured to receive a first packet; and a processing module, configured to create virtual local area network interface information based on the first packet, where the transceiver module is further configured to receive first information based on the virtual local area network interface information; and the processing module is further configured to generate first address information based on the first information, where the first address information corresponds to the virtual local area network interface information.

In an optional embodiment of the seventh aspect, the first packet is a link layer discovery protocol packet.

In an optional embodiment of the seventh aspect, the first packet includes an identifier of one virtual local area network interface or identifiers of a plurality of virtual local area network interfaces; and the processing module is configured to create, based on the identifier of the one virtual local area network interface in the first packet, the one virtual local area network interface on a physical ethernet port that receives the first packet; or create, based on the identifiers of the plurality of virtual local area network interfaces in the first packet, the plurality of virtual local area network interfaces on a physical ethernet port that receives the first packet.

In an optional embodiment of the seventh aspect, the virtual local area network interface information includes a first virtual local area network interface, the first virtual local area network interface is any interface in the virtual local area network interface information, and the first information includes first information corresponding to the first virtual local area network interface; the transceiver module is configured to receive the first information corresponding to the first virtual local area network on the first virtual local area network interface; and the processing module is configured to generate address information of the first virtual local area network interface in the first address information based on the first information corresponding to the first virtual local area network interface; or obtain address information of the first virtual local area network interface from the first information corresponding to the first virtual local area network interface.

In an optional embodiment of the seventh aspect, the virtual local area network interface information includes one virtual local area network interface, and the first address information includes address information of the one virtual local area network interface; or the virtual local area network interface information includes a plurality of virtual local area network interfaces, and the first address information includes address information of the plurality of virtual local area network interfaces.

In an optional embodiment of the seventh aspect, the transceiver module is configured to receive a router advertisement packet on the created virtual local area network interface, where the router advertisement packet includes the first information, and the first information includes network segment information; and the processing module is configured to generate the first address information based on the network segment information in the first information.

In an optional embodiment of the seventh aspect, before receiving the router advertisement packet on the created virtual local area network interface, the transceiver module is further configured to send a router solicitation packet on the created virtual local area network interface.

In an optional embodiment of the seventh aspect, the transceiver module is configured to: send a dynamic host configuration protocol request on the created virtual local area network interface; and receive a dynamic host configuration protocol response on the created virtual local area network interface, where the dynamic host configuration protocol response includes the first information, and the first information includes the first address information; and the processing module is configured to obtain the first address information from the first information in the dynamic host configuration protocol response.

In an optional embodiment of the seventh aspect, the transceiver module is configured to send an address of a service plane in the first address information to a network management device.

In an optional embodiment of the seventh aspect, the transceiver module is configured to receive an address of a service plane in second address information of a second device from the network management device.

In an optional embodiment of the seventh aspect, the processing module is further configured to establish a link based on the address of the service plane in the first address information and the address of the service plane in the second address information of the second device.

For beneficial effect of the seventh aspect and the optional embodiments of the seventh aspect, refer to the beneficial effect brought by the second aspect and the optional embodiments of the second aspect. Details are not described herein again.

An eighth aspect of this application provides a communication apparatus. The communication apparatus includes: a transceiver module, configured to receive a second packet; and a processing module, configured to create virtual local area network interface information based on the second packet; and generate third address information and routing information, where the third address information corresponds to the virtual local area network interface information.

In an optional embodiment of the eighth aspect, the second packet is a link layer discovery protocol packet, and the link layer discovery protocol packet includes an identifier of virtual local area network interface or identifiers of a plurality of virtual local area network interfaces; and the processing module is configured to: create, based on the identifier of the one virtual local area network interface in the link layer discovery protocol packet, the one virtual local area network interface on a physical ethernet port that receives the link layer discovery protocol packet; or create, based on the identifiers of the plurality of virtual local area network interfaces in the link layer discovery protocol packet, the plurality of virtual local area network interfaces on a physical ethernet port that receives the link layer discovery protocol packet.

In an optional embodiment of the eighth aspect, the second packet is a router advertisement packet, and the transceiver module is configured to receive one or more router advertisement packets, where a data link layer of the router advertisement packet carries an identifier of one virtual local area network interface; and the processing module is configured to create, based on the identifier of the one virtual local area network interface carried by the data link layer of the router advertisement packet, the one virtual local area network interface on a physical ethernet port that receives the router advertisement packet.

In an optional embodiment of the eighth aspect, the virtual local area network interface information includes one virtual local area network interface, and the third address information includes address information of the one virtual local area network interface; or the virtual local area network interface information includes a plurality of virtual local area network interfaces, and the third address information includes address information of the plurality of virtual local area network interfaces.

In an optional embodiment of the eighth aspect, the transceiver module is configured to: send a dynamic host configuration protocol request to a third device on the created virtual local area network interface; and receive a dynamic host configuration protocol response on the created virtual local area network interface; and the processing module is configured to: obtain the third address information from the dynamic host configuration protocol response; and use a default gateway address in the dynamic host configuration protocol response as a gateway address of the routing information.

In an optional embodiment of the eighth aspect, the second packet is the router advertisement packet, and the processing module is configured to: generate the third address information based on the second packet; and generate the routing information based on the second packet.

In an optional embodiment of the eighth aspect, the second packet includes network segment information, and the processing module is configured to generate the third address information based on the network segment information in the second packet.

In an optional embodiment of the eighth aspect, the processing module is configured to use a source address of the second packet as a gateway address of the routing information.

In an optional embodiment of the eighth aspect, before receiving the second packet, the transceiver module is further configured to send a router solicitation packet.

In an optional embodiment of the eighth aspect, the transceiver module is further configured to send an address of a service plane in the third address information to a network management device.

In an optional embodiment of the eighth aspect, the transceiver module is further configured to receive an address of a service plane in fourth address information of a fourth device from the network management device.

In an optional embodiment of the eighth aspect, the processing module is further configured to establish a link based on the address of the service plane in the third address information and the address of the service plane in the fourth address information of the fourth device.

For beneficial effect of the eighth aspect and the optional embodiments of the eighth aspect, refer to the beneficial effect brought by the third aspect and the optional embodiments of the third aspect. Details are not described herein again.

A ninth aspect of this application provides a communication apparatus. The communication apparatus includes: a transceiver module, configured to obtain an address of a service plane of a first apparatus, where the transceiver module is further configured to send the address of the service plane of the first apparatus to a second apparatus, where there is a correspondence between the first apparatus and the second apparatus.

In an optional embodiment of the ninth aspect, the correspondence between the first apparatus and the second apparatus is preconfigured.

In an optional embodiment of the ninth aspect, the transceiver module is configured to receive the address of the service plane of the first apparatus from the first apparatus.

In an optional embodiment of the ninth aspect, the transceiver module is further configured to obtain an address of a service plane of the second apparatus; and the transceiver module is further configured to send the address of the service plane of the second apparatus to the first apparatus.

In an optional embodiment of the ninth aspect, the transceiver module is configured to receive the address of the service plane of the second apparatus from the second apparatus.

In an optional embodiment of the ninth aspect, the transceiver module is further configured to obtain configuration information of the first apparatus and configuration information of the second apparatus.

For beneficial effect of the ninth aspect and the optional embodiments of the ninth aspect, refer to the beneficial effect brought by the fourth aspect and the optional embodiments of the fourth aspect. Details are not described herein again.

According to a tenth aspect, an embodiment of this application provides a communication apparatus. The communication apparatus includes: a processor and a memory. The memory is configured to store a computer program, and the processor is configured to invoke and run the computer program stored in the memory, to perform the method according to the first aspect, the second aspect, the third aspect, the fourth aspect, the fifth aspect, or the possible embodiments.

According to an eleventh aspect, an embodiment of this application provides a chip. The chip includes a processor, configured to invoke computer instructions from a memory and run the computer instructions, so that a device in which the chip is installed performs the method according to the first aspect, the second aspect, the third aspect, the fourth aspect, the fifth aspect, or the possible embodiments.

According to a twelfth aspect, an embodiment of this application provides a computer-readable storage medium, configured to store computer program instructions, and the computer program enables a computer to perform the method according to the first aspect, the second aspect, the third aspect, the fourth aspect, the fifth aspect, or the possible embodiments.

According to a thirteenth aspect, an embodiment of this application provides a computer program product. The computer program product includes computer program instructions, and the computer program instructions enable a computer to perform the method according to the first aspect, the second aspect, the third aspect, the fourth aspect, the fifth aspect, or the possible embodiments.

### BRIEF DESCRIPTION OF DRAWINGS

FIG. 1 is a diagram of a structure of a communication system according to an embodiment of this application;
FIG. 2 is a schematic flowchart of a link establishment method according to an embodiment of this application;
FIG. 3 is a schematic flowchart of a link establishment method according to an embodiment of this application;
FIG. 4 is a schematic flowchart of a link establishment method according to an embodiment of this application;
FIG. 5 is a schematic flowchart of a link establishment method according to an embodiment of this application;
FIG. 6 is a schematic flowchart of a link establishment method according to an embodiment of this application;
FIG. 7 is a schematic flowchart of a link establishment method according to an embodiment of this application;
FIG. 8 is a schematic flowchart of a link establishment method according to an embodiment of this application;
FIG. 9 is a block diagram of a communication apparatus according to an embodiment of this application; and
FIG. 10 is a block diagram of a communication apparatus according to an embodiment of this application.

### DESCRIPTION OF EMBODIMENTS

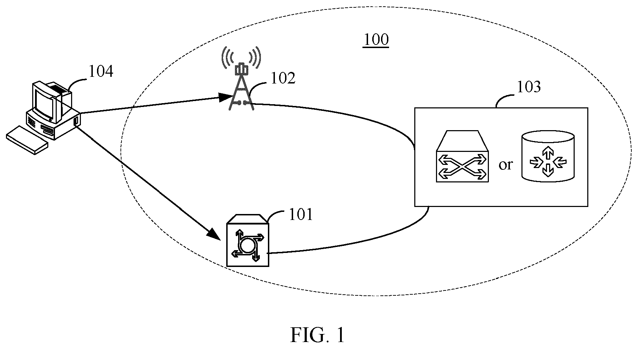

FIG. 1 is a diagram of a structure of a communication system according to an embodiment of this application. As shown in FIG. 1, the communication system 100 includes a network device 101, a network device 102, and a network device 103. The network device 101 and the network device 102 are separately connected to the network device 103. A packet may be transmitted between the network device 101 and the network device 102 through the network device 103. In this embodiment, a link of the communication system includes a link between the network device 102 and the network device 103 and a link between the network device 103 and the network device 101. The link includes a common public radio interface (common public radio interface, CPRI) link and an enhanced common public radio interface (enhanced common public radio interface, eCPRI) link. In some embodiments, the communication system may be a fronthaul network system.

In a possible scenario, the network device 101 may be a distributed unit (Distributed Unit, DU), the network device 102 may be a radio frequency unit RU (an active antenna unit AAU or a remote radio unit RRU), and the network device 103 may be a data link layer device (a layer 2 device, for example, a switch).

The DU may be included in a baseband unit BBU. The RU may be included in a radio frequency device or a radio frequency unit, for example, included in a remote radio unit (remote radio unit, RRU), an active antenna unit (active antenna unit, AAU), or a remote radio head (remote radio head, RRH).

In another possible scenario, the network device 101 may be a distributed unit DU, the network device 102 may be a radio frequency unit RU (an AAU or an RRU), and the network device 103 may alternatively be a network layer device (a layer 3 device, for example, a router).

It should be noted that, unless otherwise specified below, the distributed unit DU is described by using a baseband unit BBU as an example.

The BBU and the RU in the first scenario use layer 2 (layer 2, L2) networking, and the BBU and the RU in the second scenario use layer 3 (layer 3, L3) networking. In the two scenarios, the baseband unit is a communication apparatus or a functional module having a function of processing a baseband signal, the radio frequency unit is a communication apparatus or a functional module having a function of processing an intermediate frequency signal, a radio frequency signal, or an intermediate radio frequency signal, and the radio frequency unit may be a cloud radio frequency unit RRU, an active antenna unit AAU, or the like. An interface between the baseband unit and the radio frequency unit may be a CPRI, an eCPRI, an ethernet device common radio interface, or another type of interface. This is not limited in embodiments of this application.

When the baseband unit communicates with the radio frequency unit through the eCPRI, the baseband unit may also be referred to as an eCPRI radio equipment controller (eCPRI radio equipment controller, eREC), and the radio frequency unit may also be referred to as an eCPRI radio equipment (eCPRI radio equipment, eRE). The eREC and the eRE may be considered as two components of a wireless base station. In an example, the eREC and the eRE may be physically separated, the eREC is located in a ground equipment room, and the eRE is close to an antenna or includes an antenna. Physical layer functions of the wireless base station are classified into two parts, which are deployed on the eREC and the eRE, respectively. Specifically, the eREC includes a part of the physical layer functions and a higher layer function of an air interface. A higher layer herein includes, for example, a media access control (media access control, MAC) layer, a radio link control (radio link control, RLC) layer, a packet data convergence protocol (packet data convergence protocol, PDCP) layer, and a radio resource control (radio resource control, RRC) layer. The eRE includes a part of the physical layer functions and an analog radio frequency function.

In an embodiment, the network device 101 and the network device 102 are separately connected to a network management device 104. A channel is established between the network device 101 or the network device 102 and the network management device 104. The network management device 104 performs software installation or update, file configuration, or other maintenance functions, for example, alarming, tracking, and monitoring, on the network device 101 and the network device 102 through the channel. The network management device 104 may be, for example, an operation, administration and maintenance (operation, administration and management, OAM) device. The channel between the network device 101 and the network management device 104 may be a channel between the BBU and the network management device 104, and the channel between the network device 102 and the network management device 104 may be a channel between the RU (the AAU or the RRU) and the network management device 104. The channel may be a management plane channel.

A user may separately configure the following parameters of a service plane for the network device 101 and the network device 102 through the network management device 104: VLAN interface information, an IP address, a route, and the like. It may be learned that the link of the communication system needs to be manually configured, and consequently operation and maintenance are complex. If the link of the communication system needs to be adjusted, for example, the VLAN interface information, the IP address, and the route of the network device 101 or the network device 102 in the link of the communication system need to be adjusted, configuration of the network device 101 or the network device 102 needs to be separately modified, and the operation is complex.

In view of this, embodiments of this application provide a link establishment method, so that a network device in a communication system can automatically generate transmission-related configuration parameters, for example, VLAN interface information, an IP address, and a route, to automatically establish a link in the communication system, without manual configuration. For ease of understanding, the following briefly describes the technical solutions provided in this application by using a network device BBU and an RU as an example.

Scenario 1: The BBU and the RU use data link layer (layer 2) device networking, and the BBU is used as an address allocation node.

A layer 2 device sends LLDP packets (where an LLDP is enabled) to the BBU and the RU connected to the layer 2 device.

The BBU creates a VLAN interface based on virtual local area network interface information carried in the LLDP packet from the Layer 2 device. The BBU is used as the address allocation node. In an IPv4/IPv6 scenario, the BBU may be used as a dynamic host configuration protocol (dynamic host configuration protocol, DHCP) server. In an IPv6 scenario, there is another method: The BBU may be used as a router node, and send an RA packet on the created VLAN interface, where the RA packet includes network segment information, and the network segment information may be used to generate address information of the RU.

The RU creates a VLAN interface based on virtual local area network interface information carried in the LLDP packet from the Layer 2 device. The RU is used as an address request node. The RU starts a DHCP to apply for an IPv4 address or an IPv6 address; or the RU generates an IPv6 address based on an RA packet from the BBU.

Scenario 2: The BBU and the RU use network layer (layer 3) device networking, and a layer 3 device is used as an address allocation node.

The layer 3 device performs the following operations: The layer 3 device, used as the address allocation node, starts a DHCP service, and sends LLDP packets to the BBU and the RU connected to the layer 3 device; or the layer 3 device, used as a router node, sends RA packets (which may be periodically sent) to the BBU and the RU connected to the layer 3 device.

The BBU or the RU creates a VLAN interface based on virtual local area network interface information carried in the LLDP packet or the RA packet from the Layer 3 device. The BBU or the RU is used as a DHCP client (client) to apply for an IPv4 address or an IPv6 address from the layer 3 device; or the BBU or the RU generates parameters such as an IPv6 address and a route based on the RA packet from the layer 3 device.

In the communication system in embodiments of this application, data may be transmitted between the BBU and the RU by using an ethernet transmission mechanism.

It should be noted that the technical solutions provided in embodiments of this application may include some or all of the following content. The following several specific embodiments may be combined with each other, and same or similar concepts or processes may not be repeatedly described in some embodiments.

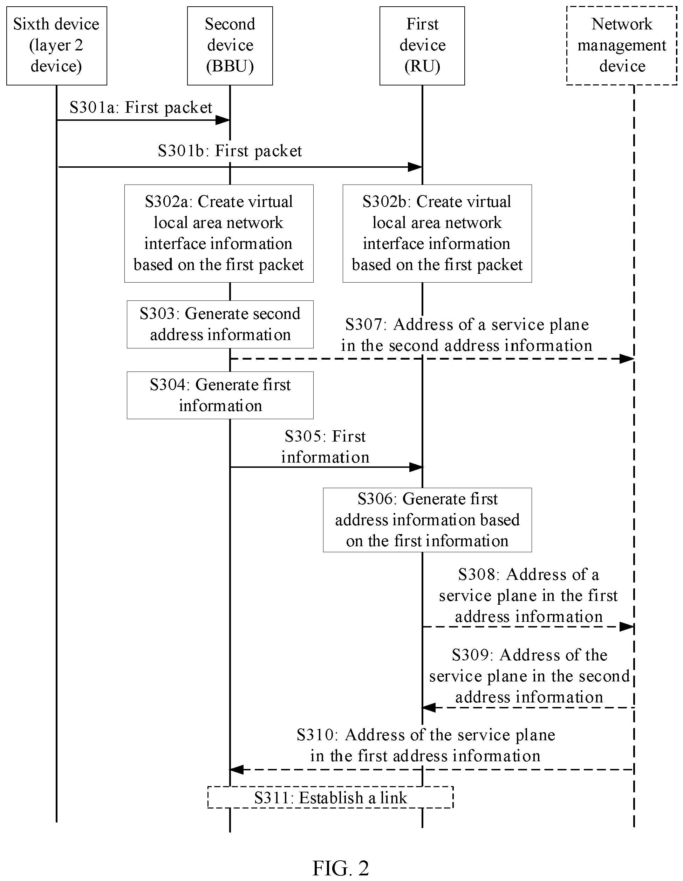

FIG. 2 is a schematic flowchart of a link establishment method according to an embodiment of this application. The link establishment method provided in this embodiment may be applied to a communication system including a first device, a second device, and a sixth device. The first device may be the network device 102 in FIG. 1, for example, the RU/RRU/AAU. The second device may be the network device 101 in FIG. 1, for example, the BBU. The sixth device may be the network device 103 in FIG. 1. The network device 103 is a data link layer device (a layer 2 device), for example, a switch. In this embodiment, the second device is an address allocation node.

As shown in FIG. 2, the link establishment method in this embodiment includes the following steps.

S301a: The sixth device sends a first packet to the second device.

S301b: The sixth device sends the first packet to the first device.

In this embodiment, the sixth device sends the first packet on a physical ethernet port connected to the second device, and the sixth device sends the first packet on a physical ethernet port connected to the first device. The sixth device sends the first packet in a broadcast manner, and devices (including the first device and the second device) in the communication system may receive the first packet.

As an example, the first packet is a link layer discovery protocol (link layer discovery protocol, LLDP) packet. For example, the first packet includes an identifier of a virtual local area network interface (a VLAN ID), and the identifier indicates interface information for creating a link of the communication system.

Optionally, the first packet may include an identifier of one virtual local area network interface or identifiers of a plurality of virtual local area network interfaces. For example, the first packet includes the identifiers of the plurality of virtual local area network interfaces, for example, identifiers of a VLAN interface 1, a VLAN interface 2, and a VLAN interface 3. The VLAN interface 1 may be an interface of a service plane, the VLAN interface 2 may be an interface of a management plane, and the VLAN interface 3 may be an interface of a clock plane. Virtual routing and forwarding (virtual routing and forwarding, VRF) of every two of the three VLAN interfaces is isolated from each other, and the VRF of the three VLAN interfaces is separately isolated from VRF of another VLAN interface.

After receiving the first packet, the second device may perform the following steps.

S302a: The second device creates virtual local area network interface information based on the first packet.

The second device creates the virtual local area network interface information on the physical ethernet (ethernet, ETH) port that receives the first packet. The virtual local area network interface information includes one or more virtual local area network interfaces.

As an example, the first packet includes the identifier of the one virtual local area network interface, and the second device creates, based on the identifier of the virtual local area network interface in the first packet on the physical ethernet port that receives the first packet, the virtual local area network interface corresponding to the identifier of the virtual local area network interface.

As an example, the first packet includes the identifiers of the plurality of virtual local area network interfaces, and the second device creates, based on the identifiers of the plurality of virtual local area network interfaces in the first packet, the plurality of virtual local area network interfaces on the physical ethernet port that receives the first packet.

Based on the foregoing two examples, the first packet may be an LLDP packet, and the LLDP packet carries one or more VLAN IDs.

Based on the foregoing two examples, the second device may be a BBU, the BBU receives the LLDP packet through an ethernet port connected to an eCPRI or a CPRI, the LLDP packet includes a VLAN ID, the BBU creates a VLAN interface based on the LLDP packet, and VRF of the VLAN interface is isolated from VRF of another VLAN interface of the BBU. In this embodiment, the VLAN interface created by the BBU is a fronthaul (fronthaul, FH) interface, and another VLAN interface of the BBU includes, for example, a backhaul network interface.

S303: The second device generates second address information of the second device.

In this embodiment, the second address information is address information of the virtual local area network interface created by the second device, for example, an internet protocol (internet protocol, IP) address (an IPv6 address or an IPv4 address) of the virtual local area network interface created by the second device.

As an example, the second device creates the one virtual local area network interface based on the first packet, and the second address information generated by the second device includes address information of the virtual local area network interface, for example, an IP address of the virtual local area network interface.

As an example, the second device creates the plurality of virtual local area network interfaces based on the first packet, and the second address information generated by the second device includes address information of the plurality of virtual local area network interfaces. For example, the plurality of virtual local area network interfaces include a VLAN interface 1, a VLAN interface 2, and a VLAN interface 3, and the second device separately generates IP addresses of the VLAN interface 1, the VLAN interface 2, and the VLAN interface 3.

S304: The second device generates first information.

As an example, the second device generates the first information based on the second address information, and the first information corresponds to the virtual local area network interface information.

As an example, the first information is used to generate first address information of the first device, the second device generates, based on the second address information, network segment information corresponding to the second address information, the first information includes the network segment information, and the network segment information in the first information is used to generate the first address information of the first device. Optionally, the first information may be carried in a router advertisement packet.

As an example, the first information includes first address information of the first device, the second device generates the first address information based on the second address information, and an address in the first address information and an address in the second address information are in a same network segment. Optionally, the first information may be carried in a dynamic host configuration protocol response.

S305: The second device sends the first information to the first device.

As an example, the second device sends the first information to the first device on the created virtual local area network interface. The created virtual local area network interface may be a virtual local area network interface of the service plane, a virtual local area network interface of the management plane (C&M), or a virtual local area network interface of the clock plane.

As an example, if the second device creates the plurality of virtual local area network interfaces, including a virtual local area network interface of the service plane, a virtual local area network interface of the management plane, and a virtual local area network interface of the clock plane, the second device sends the first information to the first device on the created virtual local area network interface of the service plane; or the second device sends the first information to the first device on the created virtual local area network interface of the management plane; or the second device sends the first information to the first device on the created virtual local area network interface of the clock plane.

After receiving the first packet, the first device may perform the following step.

S302b: The first device creates virtual local area network interface information based on the first packet.

Similar to S302a, as an example, the first device creates the virtual local area network interface information on the physical ethernet port that receives the first packet. The virtual local area network interface information includes one or more virtual local area network interfaces.

As an example, the first packet includes an identifier of the one virtual local area network interface, and the first device creates, based on the identifier of the virtual local area network interface in the first packet on the physical ethernet port that receives the first packet, the virtual local area network interface corresponding to the identifier of the virtual local area network interface.

As an example, the first packet includes identifiers of the plurality of virtual local area network interfaces, and the first device creates, based on the identifiers of the plurality of virtual local area network interfaces in the first packet, the plurality of virtual local area network interfaces on the physical ethernet port that receives the first packet.

For example, the first device may be an RU, the RU receives an LLDP through an ETH port connected to an eCPRI or a CPRI, the LLDP packet includes a VLAN ID, the RU creates a VLAN interface based on the LLDP packet, and VRF of the VLAN interface is isolated from VRF of another VLAN interface of the RU.

After completing creation of the virtual local area network interface information, and receiving the first information from the second device, the first device may perform the following step.

S306: The first device generates the first address information of the first device based on the first information.

In this embodiment, the first address information is address information of the virtual local area network interface created by the first device, for example, an IP address (an IPv6 address or an IPv4 address) of the virtual local area network interface created by the first device.

As an example, the first device receives the first information from the second device on the created virtual local area network interface, and generates the first address information of the first device based on the first information.

As an example, the virtual local area network interface information created by the first device includes the plurality of virtual local area network interfaces, and a first virtual local area network interface is any interface in the plurality of virtual local area network interfaces. The first virtual local area network interface is used as an example. The first device may receive, on the created first virtual local area network interface, first information corresponding to the first virtual local area network interface. The first device generates address information of the first virtual local area network interface in the first address information based on the first information corresponding to the first virtual local area network interface; or the first device obtains address information of the first virtual local area network interface from the first information corresponding to the first virtual local area network interface. Steps similar to those of the first virtual local area network interface may be performed on another virtual local area network interface created by the first device.

It may be learned from the foregoing example that, if the first device creates one virtual local area network interface, the first address information includes address information of the virtual local area network interface; or if the first device creates a plurality of virtual local area network interfaces, the first device may separately receive first information corresponding to the interfaces on the plurality of virtual local area network interfaces, and generate address information of the virtual local area network interfaces, and the first address information includes the address information of the plurality of virtual local area network interfaces created by the first device.

As an example, the first device obtains the first address information of the first device from the first information from the second device. In this example, the second device directly allocates the address information to the first device.

As another example, the first information includes network segment information, and the first device generates the first address information of the first device based on the network segment information in the first information. In this example, the second device allocates the network segment information to the first device, and the network segment information is used to generate the first address information of the first device.

The link establishment method shown in this embodiment is applicable to link establishment of the communication system that uses layer 2 device networking, the first device and the second device in the communication system receive the first packet from the layer 2 device, and the first device and the second device separately create the virtual local area network interface information based on the first packet. As the address allocation node, the second device allocates the address information to the second device, and generates the first information after completing creation of the virtual local area network interface information. The second device sends the first information, so that another device, for example, the first device, in the communication system generates the address information of the first device based on the first information. In the foregoing solution, the address information does not need to be manually configured for the device, so that data support is provided for implementing automatic link establishment in the communication system.

According to the embodiment shown in FIG. 2, in some embodiments, after generating the second address information, the second device may further perform the following step.

S307: The second device sends an address of the service plane in the second address information of the second device to a network management device.

As an example, the second device sends the address of the service plane in the second address information of the second device to the network management device through a management plane channel.

After generating the first address information, the first device may further perform the following step.

S308: The first device sends an address of the service plane in the first address information of the first device to the network management device.

As an example, the first device sends the address of the service plane in the first address information of the first device to the network management device through the management plane channel.

After receiving the address of the service plane in the second address information from the second device, the network management device may perform the following step.

S309: The network management device sends the address of the service plane in the second address information of the second device to the first device.

The network management device sends the address of the service plane in the second address information of the second device to the first device based on a correspondence between the first device and the second device.

After receiving the address of the service plane in the first address information from the first device, the network management device may perform the following steps.

S310: The network management device sends the address of the service plane in the first address information of the first device to the second device.

The network management device sends the address of the service plane in the first address information of the first device to the second device based on the correspondence between the first device and the second device.

S311: The first device establishes the link to the second device.

As an example, the first device establishes the link to the second device based on the address of the service plane in the first address information of the first device and the address of the service plane in the second address information of the second device.

In this embodiment, the address of the service plane in the first address information of the first device is an IP address corresponding to the virtual local area network interface of the service plane in the first address information of the first device, and the address of the service plane in the second address information of the second device is an IP address corresponding to the virtual local area network interface of the service plane in the second address information of the second device.

The network management device in this embodiment pre-stores configuration information of the first device, configuration information of the second device, and the correspondence between the first device and the second device. The network management device separately receives the first address information reported by the first device and the second address information reported by the second device, notifies the second device corresponding to the first device of the first address information, and notifies the first device corresponding to the second device of the second address information, so that the first device establishes the link to the second device, and implements automatic link establishment.

According to the embodiment in FIG. 2, the following describes in detail the link establishment method with reference to two specific embodiments. It should be noted that, for ease of understanding of the solution, in the following several embodiments, unless otherwise specified, the first packet includes an identifier of one virtual local area network interface, the virtual local area network interface information created by the second device and the second device includes the one virtual local area network interface, and the first information is used to generate the one virtual local area network interface in the first address information of the first device, or the first information includes an address of the one virtual local area network interface in the first address information.

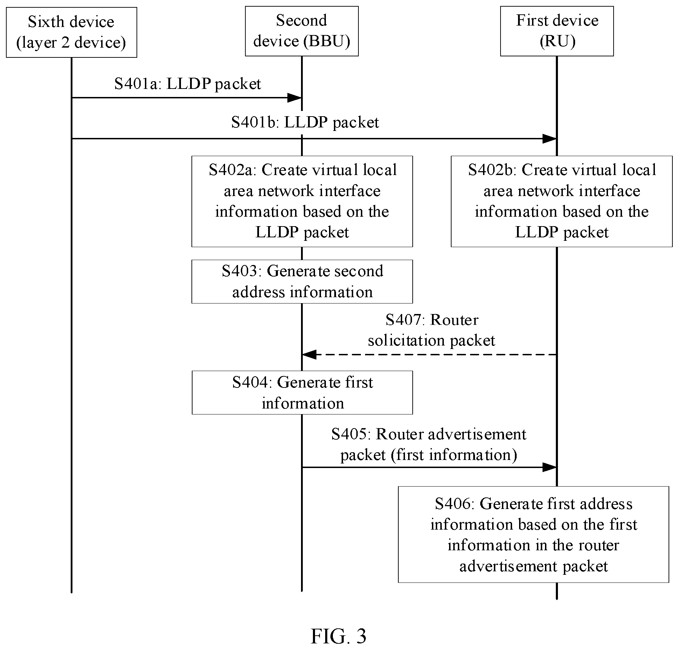

FIG. 3 is a schematic flowchart of a link establishment method according to an embodiment of this application. The link establishment method provided in this embodiment may be applied to a communication system including a first device, a second device, and a sixth device. The first device may be the network device 102 in FIG. 1, for example, the RU/RRU/AAU. The second device may be the network device 101 in FIG. 1, for example, the BBU. The sixth device may be the network device 103 in FIG. 1. The network device 103 is a data link layer device, for example, a switch.

In this embodiment, as an address allocation node, the second device may allocate an address by using an internet protocol version 6 (internet protocol version 6, IPv6) stateless address auto configuration (stateless address auto configuration, SLAAC). In some embodiments, the second device is also referred to as a router node.

As shown in FIG. 3, the link establishment method in this embodiment includes the following steps.

S401a: The sixth device sends an LLDP packet to the second device.

S402b: The sixth device sends an LLDP packet to the first device.

After receiving the LLDP packet, the second device may perform the following steps.

S402a: The second device creates virtual local area network interface information based on the LLDP packet.

As an example, the second device creates a virtual local area network interface based on an identifier of the virtual local area network interface in the LLDP packet.

S403: The second device generates second address information of the second device.

In this embodiment, the second device is the address allocation node, and allocates the second address information to the second device, and the second address information includes address information of the virtual local area network interface created by the second device.

S404: The second device generates first information.

In this embodiment, the first information is used to generate first address information of the first device. The first information includes network segment information, and the network segment information in the first information is used to generate the first address information of the first device.

S405: The second device sends a router advertisement (router advertisement, RA) packet to the first device, where the router advertisement packet includes the first information.

As an example, the second device sends the router advertisement packet on the created virtual local area network interface.

In a possible implementation, the second device periodically sends the router advertisement packet in a multicast manner.

In a possible implementation, after creating the virtual local area network interface information based on the LLDP packet, the second device sends the router advertisement packet in a multicast manner.

It may be understood that, that the second device sends the router advertisement packet in the multicast manner includes: The second device sends the router advertisement packet to another device including the first device, and the another device herein is a device that is located in a link of a same communication system as that of the second device.

After receiving the LLDP packet, the first device may perform the following step.

S402b: The first device creates virtual local area network interface information based on the LLDP packet.

As an example, the LLDP packet includes an identifier of a virtual local area network interface, and the first device creates, based on the identifier of the virtual local area network interface in the LLDP packet, the virtual local area network interface corresponding to the identifier of the virtual local area network interface.

As an example, the first device receives a router advertisement packet from the second device on the created virtual local area network interface. The router advertisement packet includes first information.

After receiving the router advertisement packet from the second device, the first device may perform the following step.

S406: The first device generates first address information of the first device based on the first information in the router advertisement packet. The first address information of the first device includes address information of the virtual local area network interface created by the first device.

In some embodiments, after performing S402b, the first device may further perform the following step.

S407: The first device sends a router solicitation (router solicitation, RS) packet to the second device.

Correspondingly, in S404, the following is specifically included: The second device generates the first information in response to the router solicitation packet. Subsequently, the second device performs S405. In this embodiment, the second device allocates the network segment information to the first device based on a router request initiated by the first device, so that the first device generates the first address information of the first device based on the network segment information.

For example, in an IPv6 scenario, the second device BBU enables RA on the created VLAN interface, and the BBU is used as an IPv6 router node. The BBU sends an RA packet on the created VLAN interface, the RA packet carries the first information, the first information includes the network segment information, and the network segment information may be used to generate an IPv6 address of the first device RU. The first device RU receives the RA packet from the BBU on the created VLAN interface, the RA packet carries the first information, and the RU generates the IPv6 address of the RU based on the network segment information in the first information.

For example, in the IPv6 scenario, the first device RU sends an RS packet to the second device BBU on the created VLAN interface, the BBU generates the first information in response to the RS packet, and the first information includes the network segment information. The BBU sends an RA packet to the RU, the RA packet carries the first information, and the RU generates the IPv6 address of the RU based on the first information in the RA packet.

The link establishment method shown in this embodiment is applicable to link establishment of the communication system that uses layer 2 device networking, the first device and the second device in the communication system receive the LLDP packet from the layer 2 device, and the first device and the second device separately create the virtual local area network interface information based on the LLDP packet. As the address allocation node, the second device allocates the address information to the second device after completing creation of the virtual local area network interface information, and generates the first information, and the first information may be used to generate the first address information of the first device. The second device may actively send the first information, or send the first information based on a request of the first device, and the first device generates the first address information of the first device based on the first information from the second device. In the foregoing solution, the address information does not need to be manually configured for the device, so that data support is provided for implementing automatic link establishment in the communication system.

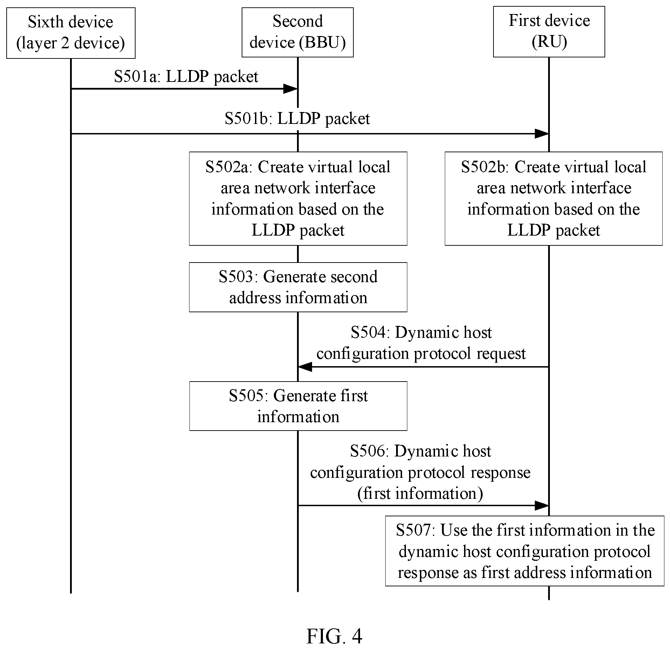

FIG. 4 is a schematic flowchart of a link establishment method according to an embodiment of this application. The link establishment method provided in this embodiment may be applied to a communication system including a first device, a second device, and a sixth device.

The first device may be the network device 102 in FIG. 1, for example, the RU/RRU/AAU. The second device may be the network device 101 in FIG. 1, for example, the BBU. The sixth device may be the network device 103 in FIG. 1. The network device 103 is a data link layer device, for example, a switch. In this embodiment, the second device is used as an address allocation node, and may allocate an address by using a DHCP. In some embodiments, the second device is also referred to as a DHCP server (server) node.

As shown in FIG. 4, the link establishment method in this embodiment includes the following steps.

S501a: The sixth device sends an LLDP packet to the second device.

S501b: The sixth device sends an LLDP packet to the first device.

After receiving the LLDP packet, the second device may perform the following steps.

S502a: The second device creates virtual local area network interface information based on the LLDP packet.

S503: The second device generates second address information of the second device.

After receiving the LLDP packet, the first device may perform the following steps.

S502b: The first device creates virtual local area network interface information based on the LLDP packet.

As an example, the LLDP packet includes an identifier of a virtual local area network interface, and the first device creates the virtual local area network interface based on the identifier of the virtual local area network interface in the LLDP packet.

S504: The first device sends a dynamic host configuration protocol request (dynamic host configuration protocol request, DHCP REQ) to the second device.

As an example, the first device sends the dynamic host configuration protocol request to the second device on the created virtual local area network interface, and the dynamic host configuration protocol request is used to request first address information of the first device.

After receiving the dynamic host configuration protocol request from the first device, the second device may perform the following steps.

S505: The second device generates first information.

The second device generates the first information based on the second address information in response to the dynamic host configuration protocol request. The first information includes the first address information of the first device. The second address information and the first address information are in a same network segment. The first address information of the first device includes address information of the virtual local area network interface created by the first device.

S506: The second device sends a dynamic host configuration protocol response (dynamic host configuration protocol response, DHCP RSP) to the first device, where the dynamic host configuration protocol response includes the first information.

As an example, the second device sends the dynamic host configuration protocol response to the first device on the created virtual local area network interface.

After receiving the dynamic host configuration protocol response from the second device, the first device may perform the following step.

S507: The first device obtains the first address information from the dynamic host configuration protocol response.

As an example, the first device receives the dynamic host configuration protocol response from the second device on the created virtual local area network interface, and obtains the first address information from the dynamic host configuration protocol response. After obtaining the first address information, the first device configures an address in the first address information on the created virtual local area network interface.

For example, in an IPv6 scenario or an IPv4 scenario, the second device BBU enables the DHCP on the created VLAN interface, and the BBU is used as a DHCP server. The first device RU sends a DHCP request to the BBU on the created VLAN interface, and the BBU sends a DHCP response to the RU in response to the DHCP request. The DHCP response carries first information, and the first information includes an IPv6 address or an IPv4 address allocated by the BBU to the RU. The RU obtains the IPv6 address or the IPv4 address of the RU from the DHCP response.

The link establishment method shown in this embodiment is applicable to link establishment of the communication system that uses layer 2 device networking, the first device and the second device in the communication system receive the LLDP packet from the layer 2 device, and the first device and the second device separately create the virtual local area network interface information based on the LLDP packet. As the address allocation node, the second device allocates the address information to the second device after completing creation of the virtual local area network interface information. After completing creation of the virtual local area network interface information, the first device sends an address allocation request to the second device, and the second device allocates the first address information to the first device in response to the request, and returns an address allocation response. The first device directly obtains the first address information of the first device from the response. In the foregoing solution, the address information does not need to be manually configured for the device, so that data support is provided for implementing automatic link establishment in the communication system.

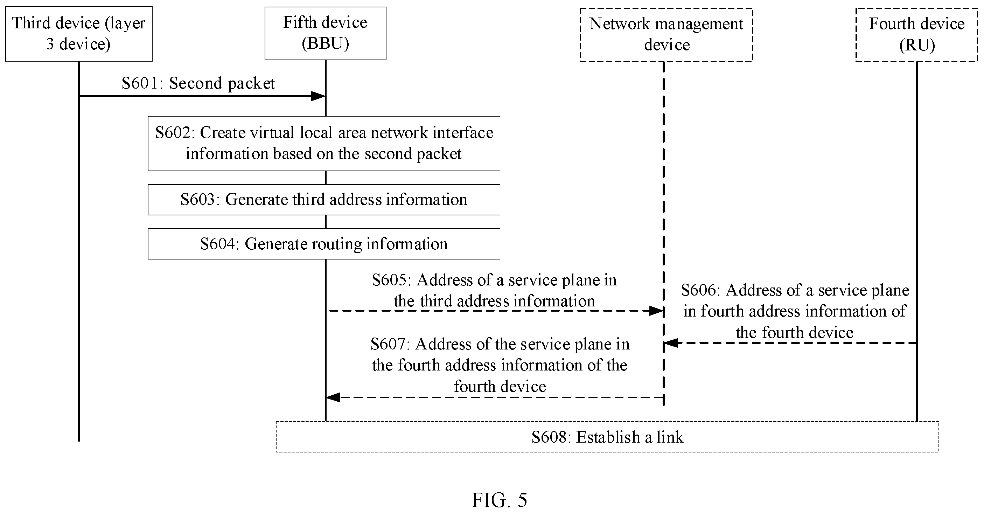

FIG. 5 is a schematic flowchart of a link establishment method according to an embodiment of this application. The link establishment method provided in this embodiment may be applied to the communication system shown in FIG. 1. The communication system includes a third device and a fifth device.

The third device may be the network device 103 in FIG. 1, and the network device 103 is a network layer device, for example, a router. The fifth device may be the network device 102 (for example, the RU/RRU/AAU) or the network device 101 (for example, the BBU) in FIG. 1. In this embodiment, the third device is used as an address allocation node.

As shown in FIG. 5, the link establishment method in this embodiment includes the following steps.

S601: The third device sends a second packet to the fifth device.

In this embodiment, the third device sends the second packet on a physical ethernet port connected to the fifth device. The third device sends the second packet in a broadcast manner, and a device (including the fifth device) in the communication system may receive the second packet.

Optionally, the second packet is a router advertisement packet or a link layer discovery protocol packet.

Optionally, the second packet is a router advertisement packet, and a data link layer of the router advertisement packet carries an identifier of one virtual local area network interface.

Optionally, the second packet is a link layer discovery protocol packet, and the link layer discovery protocol packet may include an identifier of one virtual local area network interface or identifiers of a plurality of virtual local area network interfaces. For example, the link layer discovery protocol packet may include the identifiers of the plurality of virtual local area network interfaces, for example, identifiers of a VLAN interface 1, a VLAN interface 2, and a VLAN interface 3. The VLAN interface 1 is an interface of a service plane, the VLAN interface 2 is an interface of a management plane, and the VLAN interface 3 is an interface of a clock plane. VRF of every two of the three VLAN interfaces is isolated from each other, and the VRF of the three VLAN interfaces is isolated from VRF of another VLAN interface.

S602: The fifth device creates virtual local area network interface information based on the second packet.

The fifth device creates the virtual local area network interface information on the physical ethernet port that receives the second packet, and the virtual local area network interface information includes one or more virtual local area network interfaces.

As an example, the second packet is a router advertisement packet, a data link layer of the router advertisement packet carries an identifier of one virtual local area network interface, and the fifth device creates, based on the identifier of the virtual local area network interface in the router advertisement packet on the physical ethernet port that receives the router advertisement packet, the virtual local area network interface corresponding to the identifier of the virtual local area network interface.

As an example, the second packet is a router advertisement packet. In S601, the following is included: The third device sends a plurality of second packets to the fifth device. In S602, the following is included: The fifth device creates the plurality of virtual local area network interfaces based on the plurality of second packets. For creating, based on any second packet in the plurality of second packets, a virtual local area network interface corresponding to the second packet, refer to an execution step in the foregoing example.

As an example, the second packet is a link layer discovery protocol packet, the link layer discovery protocol packet includes an identifier of one virtual local area network interface, and the fifth device creates, based on the identifier of the virtual local area network interface in the link layer discovery protocol packet on the physical ethernet port that receives the link layer discovery protocol packet, the virtual local area network interface corresponding to the identifier of the virtual local area network interface.

As an example, the second packet is a link layer discovery protocol packet, the link layer discovery protocol packet includes identifiers of a plurality of virtual local area network interfaces, and the fifth device creates, based on the identifiers of the plurality of virtual local area network interfaces in the link layer discovery protocol packet, the plurality of virtual local area network interfaces on the physical ethernet port that receives the link layer discovery protocol packet.

Based on the foregoing two examples, the fifth device may be a BBU or an RU. The BBU is used as an example. The BBU receives the link layer discovery protocol packet through an ETH port connected to an eCPRI (or a CPRI), the link layer discovery protocol packet includes a VLAN ID, the BBU creates a VLAN interface based on the VLAN ID in the link layer discovery protocol packet, and VRF of the VLAN interface is isolated from VRF of another VLAN interface of the BBU. In this embodiment, the virtual local area network interface created by the BBU is a fronthaul interface, and another VLAN interface of the BBU includes, for example, a backhaul network interface.

S603: The fifth device generates third address information.

In this embodiment, the third address information is address information of the virtual local area network interface created by the fifth device, for example, an IP address (an IPv6 address or an IPv4 address) of the virtual local area network interface created by the fifth device.

Optionally, after generating the third address information, the fifth device configures an address in the third address information on the created virtual local area network interface.

As an example, the second packet is a router advertisement packet or a link layer discovery protocol packet, the fifth device creates one virtual local area network interface based on the second packet, and the third address information generated by the fifth device includes address information of the virtual local area network interface, for example, an IP address of the virtual local area network interface.

As an example, the second packet is a link layer discovery protocol packet, the fifth device creates a plurality of virtual local area network interfaces based on the link layer discovery protocol packet, and the third address information generated by the fifth device includes address information of the plurality of virtual local area network interfaces. For example, the plurality of virtual local area network interfaces include a VLAN interface 1, a VLAN interface 2, and a VLAN interface 3, and the fifth device separately generates IP addresses of the VLAN interface 1, the VLAN interface 2, and the VLAN interface 3.

S604: The fifth device generates routing information.

The routing information generated by the fifth device includes a gateway address, a network target, a network mask, and the like, and the gateway address may be determined based on a default route or a source address route.

The link establishment method shown in this embodiment is applicable to link establishment of the communication system that uses layer 3 device networking, the third device in the communication system is the address allocation node, and the third device sends the second packet, so that the fifth device in the communication system creates the virtual local area network interface information based on the second packet, and generates the address information and the routing information of the fifth device. In the foregoing solution, the address information and the routing information do not need to be manually configured for the device, so that data support is provided for implementing automatic link establishment in the communication system.

According to the embodiment shown in FIG. 5, after generating the third address information, the fifth device may further perform the following steps.

S605: The fifth device sends an address of a service plane in the third address information to a network management device.

As an example, the fifth device sends the address of the service plane in the third address information to the network management device through a management plane channel.

S606: A fourth device sends an address of a service plane in fourth address information of the fourth device to the network management device.

A manner in which the fourth device generates the fourth address information is similar to that of the fifth device. Refer to S601 to S603.

S607: The network management device sends the address of the service plane in the fourth address information of the fourth device to the fifth device.

S608: The fifth device establishes a link to the fourth device based on the address of the service plane in the third address information and the address of the service plane in the fourth address information of the fourth device.

As an example, the fifth device receives the address of the service plane in the fourth address information of the fourth device from the network management device through the management plane channel.

For example, if the fifth device is the BBU, the fourth device is the RU/RRU/AAU corresponding to the BBU; or if the fifth device is the RU/RRU/AAU, the fourth device is the BBU corresponding to the RU/RRU/AAU.

The network management device in this embodiment pre-stores configuration information of the fourth device, configuration information of the fifth device, and a correspondence between the fourth device and the fifth device. After receiving the fourth address information from the fourth device, the network management device may send, to the fifth device, the fourth address information of the fourth device corresponding to the fifth device, so that the fifth device establishes the link to the fourth device, and implements automatic link establishment.

According to the embodiment in FIG. 5, the following describes in detail the link establishment method with reference to two specific embodiments. It should be noted that, for ease of understanding of the solution, in the following several embodiments, unless otherwise specified, the router advertisement packet or the LLDP packet includes an identifier of one virtual local area network interface, and the virtual local area network interface information created by the fifth device includes the virtual local area network interface.

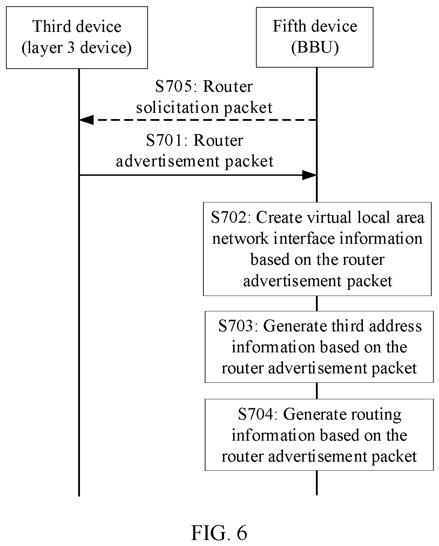

FIG. 6 is a schematic flowchart of a link establishment method according to an embodiment of this application. The link establishment method provided in this embodiment may be applied to a communication system including a third device and a fifth device.

The third device may be the network device 103 in FIG. 1, and the network device 103 is a network layer device, for example, a router. The fifth device may be the network device 102 (for example, the RU/RRU/AAU) or the network device 101 (for example, the BBU) in FIG. 1. In this embodiment, the third device is used as an address allocation node, and may allocate an address by using an IPv6 SLAAC. In some embodiments, the third device is also referred to as a router node. As shown in FIG. 6, the method includes the following steps.

S701: The third device sends a router advertisement packet to the fifth device.

In this embodiment, the third device may send the router advertisement packet on a physical ethernet port connected to the fifth device.

S702: The fifth device creates virtual local area network interface information based on the router advertisement packet.

As an example, a data link layer of the router advertisement packet carries an identifier of a virtual local area network interface, and the fifth device creates, based on the identifier of the virtual local area network interface carried by the data link layer of the router advertisement packet, the virtual local area network interface corresponding to the identifier of the virtual local area network interface.

For example, the third device enables an ETH port connected to the fifth device, and sends the RA packet on the ETH port. The data link layer of the RA packet carries a VLAN ID. The fifth device BBU or RU receives the RA packet from the third device on the ETH port connected to an eCPRI (or a CPRI), and the BBU or the RU creates, based on the VLAN ID carried at the data link layer in the RA packet, a VLAN interface corresponding to the VLAN ID. The VLAN interface created by the BBU or the RU is a fronthaul interface, and VRF of the VLAN interface is isolated from VRF of another VLAN interface.

S703: The fifth device generates third address information based on the router advertisement packet.

As an example, the router advertisement packet further includes network layer information, and a prefix of the network layer information indicates network segment information. The fifth device generates the third address information based on the network segment information indicated in the router advertisement packet. Optionally, the network layer information further includes a protocol type, and the fifth device generates the third address information based on the network segment information and the protocol type that are indicated in the router advertisement packet. The protocol type includes the 7217 protocol or the EUI64 protocol. The two protocols are existing protocols. Details are not described herein.

S704: The fifth device generates routing information based on the router advertisement packet.

As an example, the fifth device generates a gateway address of the routing information based on the network layer information in the router advertisement packet. The network layer information includes a source address of the router advertisement packet, and the fifth device uses the source address of the router advertisement packet as the gateway address of the routing information.

In some embodiments, before the third device performs S701, the method further includes the following step.

S705: The fifth device sends a router solicitation packet to the third device.

As an example, the third device generates the network segment information in response to the router solicitation packet. Subsequently, the third device performs S701, and the router advertisement packet in S701 carries the network segment information. In this example, the third device allocates the network segment information to the fifth device based on a router request initiated by the fifth device, so that the fifth device generates the third address information of the fifth device based on the network segment information.

The link establishment method shown in this embodiment is applicable to link establishment of the communication system that uses layer 3 device networking, the fifth device in the communication system receives a router packet from the third device, and creates the virtual local area network interface information based on the router packet. As the address allocation node, the third device may carry the network segment information in the router advertisement packet, so that the fifth device generates address information of the fifth device based on the network segment information in the router advertisement packet. The third device may actively send the router advertisement packet, or send the router advertisement packet based on the request of the fifth device. In the foregoing solution, the address information does not need to be manually configured for the device, so that data support is provided for implementing automatic link establishment in the communication system.

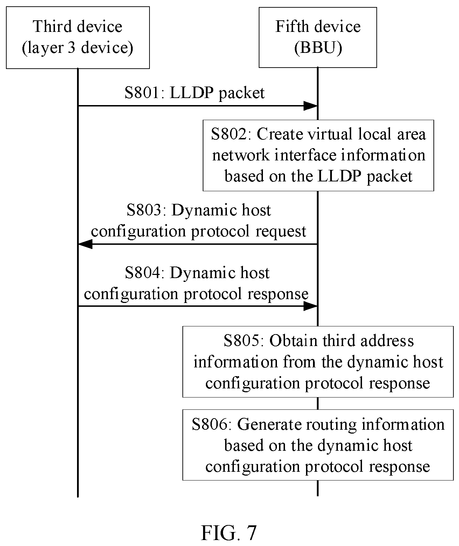

FIG. 7 is a schematic flowchart of a link establishment method according to an embodiment of this application. The link establishment method provided in this embodiment may be applied to a communication system including a third device and a fifth device.

The third device may be the network device 103 in FIG. 1, and the network device 103 is a network layer device, for example, a router. The fifth device may be the network device 102 (for example, the RU/RRU/AAU) or the network device 101 (for example, the BBU) in FIG. 1. In this embodiment, the third device is used as an address allocation node, and may allocate an address by using a DHCP. In some embodiments, the third device is also referred to as a DHCP server node.

As shown in FIG. 7, the link establishment method in this embodiment includes the following steps.

S801: The third device sends an LLDP packet to the fifth device.

In this embodiment, the third device sends the LLDP packet on a physical ethernet port connected to the fifth device.

S802: The fifth device creates virtual local area network interface information based on the LLDP packet.

As an example, the LLDP packet includes an identifier of a virtual local area network interface, and the fifth device creates, based on the identifier of the virtual local area network interface in the LLDP packet, the virtual local area network interface corresponding to the identifier of the virtual local area network interface.

For example, the third device enables an ETH port connected to the fifth device, and sends the LLDP packet on the ETH port. The LLDP packet includes data link layer information, and the data link layer information includes a VLAN ID. The fifth device BBU or RU receives the LLDP packet from the third device on the ETH port connected to an eCPRI (or a CPRI), and the BBU or the RU creates, based on the data link layer information in the LLDP packet, a VLAN interface corresponding to the VLAN ID. VRF of the VLAN interface created by the BBU or the RU is isolated from VRF of another VLAN interface.

S803: The fifth device sends a dynamic host configuration protocol request to the third device.

As an example, the fifth device sends the dynamic host configuration protocol request to the third device on the created virtual local area network interface.

S804: The third device sends a dynamic host configuration protocol response to the fifth device.

S805: The fifth device obtains third address information from the dynamic host configuration protocol response.

As an example, the fifth device receives the dynamic host configuration protocol response from the third device on the created virtual local area network interface, and obtains the third address information from the dynamic host configuration protocol response. After obtaining the third address information, the fifth device configures an address in the third address information on the created virtual local area network interface.

S806: The fifth device generates routing information based on the dynamic host configuration protocol response.

As an example, the fifth device uses a default gateway address in the dynamic host configuration protocol response as a gateway address of the routing information.

The link establishment method shown in this embodiment is applicable to link establishment of the communication system that uses layer 3 device networking, the fifth device in the communication system receives the LLDP packet from the third device, and creates the virtual local area network interface information based on the LLDP packet. The third device is the address allocation node, and the fifth device sends the dynamic host configuration protocol request to the third device on the created virtual local area network interface, to request the third device to allocate address information to the fifth device. The fifth device receives the dynamic host configuration protocol response from the third device, obtains the address information of the fifth device from the response, and generates the routing information based on the response. In the foregoing solution, the address information and the routing information do not need to be manually configured for the device, so that data support is provided for implementing automatic link establishment in the communication system.

It may be learned from the foregoing several embodiments that when the communication system uses layer 2 device networking, the second device (for example, the BBU) is used as an address allocation node, and the first device (for example, the RU/RRU/AAU) is used as an address request node; or when the communication system uses layer 3 device networking, the third device (the layer 3 device, for example, the router) is used as an address allocation node, and the fifth device (for example, the BBU) and the fourth device (for example, the RU/RRU/AAU) are used as address request nodes. It may be learned that in different network networking, functions of devices are different. Therefore, for the first device, the second device, the fourth device, and the fifth device, the devices need to determine whether the current networking is layer 2 networking or layer 3 networking, so that the devices determine whether the devices are address allocation nodes or address request nodes, to automatically perform corresponding method steps.

In this case, an embodiment of this application further provides a method for determining an address allocation node, so that a device identifies, by using the method, whether the device has an address allocation capability.

For ease of understanding, the following uses a BBU as an example for solution description.

In a possible implementation, after receiving the LLDP packet and creating the virtual local area network interface information, the BBU sends an RS packet for N times on the created virtual local area network interface, and checks whether an RA packet in response to the RS packet can be received on the created virtual local area network interface. If the BBU can receive the RA packet, it may be determined that the BBU is the address request node. If the BBU does not receive the RA packet, it may be determined that the BBU is the address allocation node. N is a positive integer.

For example, after creating the virtual local area network interface information based on the LLDP packet, the second device shown in FIG. 3 sends the RS packet (not shown in the figure) on the created virtual local area network interface. If the second device does not receive the RA packet in response to the RS packet, the second device may learn that the second device is the address allocation node, and the second device performs the step of generating the second address information.

For example, after creating the virtual local area network interface information based on the LLDP packet, the first device shown in FIG. 3 sends the RS packet on the created virtual local area network interface (S407), the first device receives the RA packet in response to the RS packet (S405), and the first device may learn that the first device is the address request node.

For example, the fifth device shown in FIG. 6 sends the RS packet (S705), the fifth device receives the RA packet in response to the RS packet (S701), and the fifth device may learn that the fifth device is the address request node.

In a possible implementation, after receiving the LLDP packet and creating the virtual local area network interface information, the BBU sends a DHCP request for N times on the created virtual local area network interface, and checks whether a DHCP response in response to the DHCP request can be received on the created virtual local area network interface. If the BBU can receive the DHCP response, it may be determined that the BBU is the address request node. If the BBU does not receive the DHCP response, it may be determined that the BBU is the address allocation node. N is a positive integer.

For example, after creating the virtual local area network interface information based on the LLDP packet, the second device shown in FIG. 4 sends the DHCP request (not shown in the figure) on the created virtual local area network interface. If the second device does not receive the DHCP response in response to the DHCP request, the second device may learn that the second device is the address allocation node, and the second device performs the step of generating the second address information.

For example, after creating the virtual local area network interface information based on the LLDP packet, the first device shown in FIG. 4 sends the DHCP request on the created virtual local area network interface (S504), the first device receives the DHCP response in response to the DHCP request (S506), and the first device may learn that the first device is the address request node.

For example, after creating the virtual local area network interface information based on the LLDP packet, the fifth device shown in FIG. 7 sends the DHCP request on the created virtual local area network interface (S803), the fifth device receives the DHCP response in response to the DHCP request (S804), and the fifth device may learn that the fifth device is the address request node.

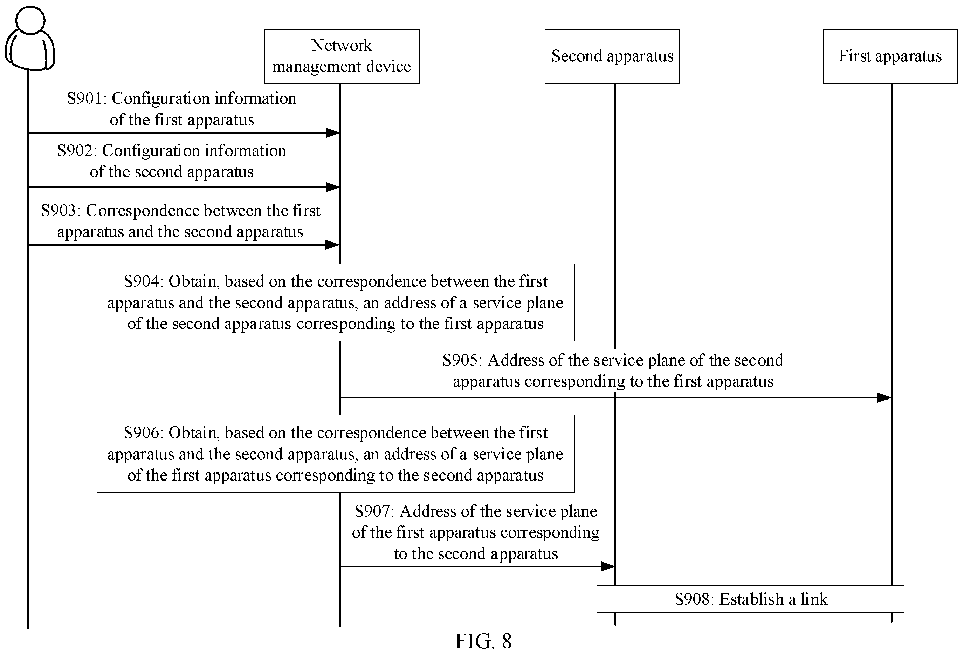

An embodiment of this application further provides a link establishment method. The method may be applied to a communication system including a first apparatus and a second apparatus that have a correspondence. The first apparatus is connected to the second apparatus through a layer 2 device (for example, a switch) or a layer 3 device (for example, a router). The first apparatus may be the network device 101 in FIG. 1, the second apparatus may be the network device 102 in FIG. 1, the network device 101 includes a BBU, and the network device 102 includes an RU/RRU/AAU. The following describes a process of establishing a link between the first apparatus and the second apparatus with reference to FIG. 8.

FIG. 8 is a schematic flowchart of a link establishment method according to an embodiment of this application. As shown in FIG. 8, the link establishment method in this embodiment includes the following steps.

S901: A network management device receives configuration information of a first apparatus.

S902: The network management device receives configuration information of a second apparatus.

S903: The network management device receives a correspondence between the first apparatus and the second apparatus.

In this embodiment, the correspondence between the first apparatus and the second apparatus is preconfigured.

S904: The network management device obtains, based on the correspondence between the first apparatus and the second apparatus, an address of a service plane of the second apparatus corresponding to the first apparatus, where the address of the service plane of the second apparatus includes the address of the service plane of the second apparatus.

In an example, that the network management device obtains the address of the service plane of the second apparatus corresponding to the first apparatus includes: The network management device receives the address of the service plane of the second apparatus from the second apparatus. In this example, after generating the address of the service plane of the second apparatus, the second apparatus reports the address of the service plane of the second apparatus to the network management device.

For example, a virtual local area network interface created by the second apparatus includes a plurality of virtual local area network interfaces, for example, a VLAN interface 1, a VLAN interface 2, and a VLAN interface 3, and the VLAN interface 1 is a virtual local area network interface of the service plane. The second apparatus reports an IP address of the VLAN interface 1 of the second apparatus to the network management device.

S905: The network management device sends the address of the service plane of the second apparatus corresponding to the first apparatus to the first apparatus.

S906: The network management device obtains, based on the correspondence between the first apparatus and the second apparatus, an address of a service plane of the first apparatus corresponding to the second apparatus, where the address of the service plane of the first apparatus includes the address of the service plane of the first apparatus.

In an example, that the network management device obtains the address of the service plane of the first apparatus corresponding to the second apparatus includes: The network management device receives the address of the service plane of the first apparatus from the first apparatus. In this example, after generating the address of the service plane of the first apparatus, the first apparatus reports the address of the service plane of the first apparatus to the network management device.

For example, a virtual local area network interface created by the first apparatus includes a plurality of virtual local area network interfaces, for example, a VLAN interface 1, a VLAN interface 2, and a VLAN interface 3, and the VLAN interface 1 is a virtual local area network interface of the service plane. The first apparatus reports address information of the VLAN interface 1 of the first apparatus to the network management device.

S907: The network management device sends the address of the service plane of the first apparatus corresponding to the second apparatus to the second apparatus.

S908: The first apparatus establishes a link to the second apparatus.

For example, the first apparatus is an address allocation node. For example, the first apparatus is a BBU. After creating the virtual local area network interface information, the first apparatus generates the address of the service plane of the first apparatus, and reports the address of the service plane of the first apparatus to the network management device. The first apparatus may further allocate network segment information or address information to the second apparatus. For example, the second apparatus is an RU/RRU/AAU corresponding to the BBU. The second apparatus generates the address of the service plane of the second apparatus based on the network segment information from the first apparatus, or the second apparatus directly obtains the address of the service plane of the second apparatus from the first apparatus, and the second apparatus reports the address of the service plane of the second apparatus to the network management device. The first apparatus may learn of the address of the service plane of the second apparatus through the network management device, and establish the link to the second apparatus. The second apparatus may learn of the address of the service plane of the first apparatus through the network management device, and establish the link to the first apparatus.

For example, neither the first apparatus nor the second apparatus is an address allocation node. The first apparatus may generate or obtain the address of the service plane of the first apparatus by interacting with a layer 3 device (for example, a router), and the second apparatus may generate or obtain the address of the service plane of the second apparatus by interacting with a layer 3 device. For example, the first apparatus is a BBU, and the second apparatus is an RU/RRU/AAU corresponding to the BBU. The first apparatus reports the address of the service plane of the first apparatus to the network management device, and the second apparatus reports the address of the service plane of the second apparatus to the network management device. The first apparatus may learn of the address of the service plane of the second apparatus through the network management device, and establish the link to the second apparatus. The second apparatus may learn of the address of the service plane of the first apparatus through the network management device, and establish the link to the first apparatus.

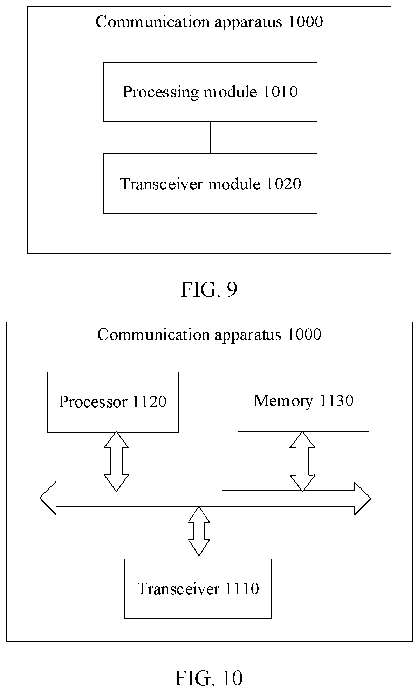

FIG. 9 is a block diagram of a communication apparatus according to an embodiment of this application. As shown in FIG. 9, the apparatus 1000 may include a processing module 1010 and a transceiver module 1020.

Optionally, the communication apparatus 1000 may correspond to the second device in the method embodiments, for example, may be the BBU or a component (for example, a chip or a chip system) configured in the BBU. The transceiver module 1020 is configured to receive a first packet. The processing module 1010 is configured to create virtual local area network interface information based on the first packet, where the virtual local area network interface information corresponds to first information, and the first information is used to generate first address information of a first device, or the first information includes the first address information. The processing module 1010 is further configured to generate second address information, where the second address information corresponds to the virtual local area network interface information.

It should be understood that specific processes performed by the modules are described in detail in the method embodiments shown in FIG. 2 to FIG. 4. For brevity, details are not described herein again.

Optionally, the communication apparatus 1000 may correspond to the first device in the method embodiments, for example, may be the RU/RRU/AAU or a component (for example, a chip or a chip system) configured in the RU/RRU/AAU. The transceiver module 1020 is configured to receive a first packet. The processing module 1010 is configured to create virtual local area network interface information based on the first packet. The transceiver module 1020 is further configured to receive first information based on the virtual local area network interface information. The processing module 1010 is further configured to generate first address information based on the first information, where the first address information corresponds to the virtual local area network interface information.

It should be understood that specific processes performed by the modules are described in detail in the method embodiments shown in FIG. 2 to FIG. 4. For brevity, details are not described herein again.

Optionally, the communication apparatus 1000 may correspond to the fifth device in the method embodiments, for example, may be the BBU or the RU/RRU/AAU, or a component (for example, a chip or a chip system) configured in the BBU or the RU/RRU/AAU. The transceiver module 1020 is configured to receive a second packet. The processing module 1010 is configured to: create virtual local area network interface information based on the second packet; and generate third address information and routing information, where the third address information corresponds to the virtual local area network interface information.

It should be understood that specific processes performed by the modules are described in detail in the method embodiments shown in FIG. 5 to FIG. 7. For brevity, details are not described herein again.

Optionally, the communication apparatus 1000 may correspond to the network management device in the method embodiments, or a component (for example, a chip or a chip system) configured in the network management device. The transceiver module is configured to obtain an address of a service plane of a first apparatus. The transceiver module is further configured to send the address of the service plane of the first apparatus to a second apparatus, where there is a correspondence between the first apparatus and the second apparatus.

It should be understood that specific processes performed by the modules are described in detail in the method embodiment shown in FIG. 8. For brevity, details are not described herein again.

The transceiver module 1020 in the communication apparatus 1000 may be implemented through a transceiver, for example, may correspond to a transceiver 1110 in a communication apparatus 1100 shown in FIG. 10. The processing module 1010 in the communication apparatus 1000 may be implemented through at least one processor, for example, may correspond to a processor 1120 in the communication apparatus 1100 shown in FIG. 10.

When the communication apparatus 1000 is a chip or a chip system configured in a network device (for example, a BBU, an RU/RRU/AAU, or a network management device), the transceiver module 1020 in the communication apparatus 1000 may be implemented through an input/output interface, a circuit, or the like, and the processing module 1010 in the communication apparatus 1000 may be implemented through a processor, a microprocessor, an integrated circuit, or the like integrated in the chip or the chip system.

In some embodiments, the foregoing module may also be referred to as a unit. For example, the processing module may be referred to as a processing unit, and the transceiver module may be referred to as a transceiver unit.

FIG. 10 is a block diagram of another communication apparatus according to an embodiment of this application. As shown in FIG. 10, the communication apparatus 1100 may include a transceiver 1110, a processor 1120, and a memory 1130. The transceiver 1110, the processor 1120, and the memory 1130 communicate with each other through an internal connection path, the memory 1130 is configured to store instructions, and the processor 1120 is configured to execute the instructions stored in the memory 1130, to control the transceiver 1110 to send a signal and/or receive a signal.

It should be understood that the communication apparatus 1100 may correspond to the first device, the second device, the fifth device, or the network management device in the foregoing method embodiments, and may be configured to perform steps and/or procedures performed by the first device, the second device, the fifth device, or the network management device in the foregoing method embodiments. Optionally, the memory 1130 may include a read-only memory and a random access memory, and provide instructions and data for the processor. A part of the memory may further include a nonvolatile random access memory. The memory 1130 may be an independent device, or may be integrated into the processor 1120. The processor 1120 may be configured to execute the instructions stored in the memory 1130. When the processor 1120 executes the instructions stored in the memory, the processor 1120 is configured to perform steps and/or procedures corresponding to the first device, the second device, the fifth device, or the network management device in the foregoing method embodiments.

Optionally, the communication apparatus 1100 is the first device, for example, the RU/RRU/AAU, in the foregoing embodiments.

Optionally, the communication apparatus 1100 is the second device, for example, the BBU, in the foregoing embodiments.

Optionally, the communication apparatus 1100 is the fifth device, for example, the BBU or the RU/RRU/AAU, in the foregoing embodiments.

Optionally, the communication apparatus 1100 is the network management device in the foregoing embodiments.

The transceiver 1110 may include a transmitter and a receiver. The transceiver 1110 may further include an antenna. There may be one or more antennas. The processor 1120, the memory 1130, and the transceiver 1110 may be components integrated into different chips. For example, the processor 1120 and the memory 1130 may be integrated into a baseband chip, and the transceiver 1110 may be integrated into a radio frequency chip. Alternatively, the processor 1120, the memory 1130, and the transceiver 1110 may be components integrated into a same chip. This is not limited in this application.

Optionally, the communication apparatus 1100 is a component, for example, a chip or a chip system, configured in the first device, the second device, the fifth device, or the network management device.

Alternatively, the transceiver 1120 may be a communication interface, for example, an input/output interface or a circuit. The transceiver 1120, the processor 1110, and the memory 1130 may be integrated into a same chip, for example, integrated into the baseband chip.

An embodiment of this application further provides a communication apparatus. The communication apparatus includes at least one processor. The at least one processor is configured to execute a computer program stored in a memory, so that the communication apparatus performs the method steps in any one of the foregoing method embodiments.

An embodiment of this application further provides a communication apparatus. The communication apparatus includes a processor and an input/output interface. The input/output interface is coupled to the processor. The input/output interface is configured to input and/or output information. The information includes at least one of instructions and data. The processor is configured to execute a computer program, so that the communication apparatus performs the method steps in any one of the foregoing method embodiments.

An embodiment of this application further provides a communication apparatus. The communication apparatus includes a processor and a memory. The memory is configured to store a computer program, and the processor is configured to invoke the computer program from the memory and run the computer program, so that the communication apparatus performs the method steps in any one of the foregoing method embodiments.

It should be understood that the communication apparatus may be one or more chips. For example, the communication apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods can be implemented through a hardware integrated logical circuit in the processor, or by using instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in any one of the foregoing method embodiments may be implemented through a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the system and methods described in this specification includes but is not limited to these memories and any memory of another proper type.

According to the method provided in embodiments of this application, this application further provides a computer program product. The computer program product includes computer program instructions; and when the computer program instructions are run on a computer, the computer is enabled to perform the method steps in any one of the foregoing method embodiments.

According to the method provided in embodiments of this application, this application further provides a computer-readable storage medium. The computer-readable storage medium stores program code; and when the program code is run on a computer, the computer is enabled to perform the method steps in any one of the foregoing method embodiments.

According to the method provided in embodiments of this application, this application further provides a communication system. The communication system may include the first device (for example, the RU/RRU/AAU), the second device (for example, the BBU), and the sixth device (the layer 2 device, for example, the switch), or include the fifth device (for example, the BBU and the RU) and the third device (the layer 3 device, for example, the router). Optionally, the communication system further includes a network management device.

Terms such as "component", "module", "unit", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with another system by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A link establishment method, comprising:
receiving a first packet;
creating virtual local area network interface information based on the first packet, wherein the virtual local area network interface information corresponds to first information, and the first information is used to generate first address information of a first device, or the first information comprises the first address information; and
generating second address information, wherein the second address information corresponds to the virtual local area network interface information.

2. The method according to claim 1, wherein
the first packet is a link layer discovery protocol packet.

3. The method according to claim 1 or 2, wherein the first packet comprises an identifier of one virtual local area network interface or identifiers of a plurality of virtual local area network interfaces, and creating the virtual local area network interface information based on the first packet comprises:
creating, based on the identifier of the one virtual local area network interface in the first packet, the one virtual local area network interface on a physical ethernet port that receives the first packet; or
creating, based on the identifiers of the plurality of virtual local area network interfaces in the first packet, the plurality of virtual local area network interfaces on a physical ethernet port that receives the first packet.

4. The method according to any one of claims 1 to 3, wherein
the virtual local area network interface information comprises one virtual local area network interface, and the second address information comprises address information of the one virtual local area network interface; or
the virtual local area network interface information comprises a plurality of virtual local area network interfaces, and the second address information comprises address information of the plurality of virtual local area network interfaces.

5. The method according to any one of claims 1 to 4, wherein
the method further comprises:
sending the first information to the first device on the created virtual local area network interface.

6. The method according to claim 5, wherein the first information is used to generate the first address information of the first device, and
sending the first information to the first device on the created virtual local area network interface comprises:
sending a router advertisement packet to the first device on the created virtual local area network interface, wherein the router advertisement packet comprises the first information, and the first information comprises network segment information.

7. The method according to claim 6, wherein before sending the router advertisement packet to the first device on the created virtual local area network interface, the method further comprises:
receiving a router solicitation packet on the created virtual local area network interface.

8. The method according to claim 5, wherein the first information comprises the first address information, and sending the first information to the first device on the created virtual local area network interface comprises:
receiving a dynamic host configuration protocol request on the created virtual local area network interface; and
sending a dynamic host configuration protocol response to the first device on the created virtual local area network interface, wherein the dynamic host configuration protocol response comprises the first information.

9. The method according to any one of claims 1 to 8, wherein the method further comprises:
sending an address of a service plane in the second address information to a network management device.

10. The method according to any one of claims 1 to 9, wherein the method further comprises:
receiving an address of a service plane in the first address information of the first device from the network management device.

11. The method according to any one of claims 1 to 10, wherein the method further comprises:
establishing the link based on the address of the service plane in the second address information and the address of the service plane in the first address information of the first device.

12. A link establishment method, comprising:
receiving a first packet;
creating virtual local area network interface information based on the first packet;
receiving first information based on the virtual local area network interface information; and
generating first address information based on the first information, wherein the first address information corresponds to the virtual local area network interface information.

13. The method according to claim 12, wherein
the first packet is a link layer discovery protocol packet.

14. The method according to claim 12 or 13, wherein the first packet comprises an identifier of one virtual local area network interface or identifiers of a plurality of virtual local area network interfaces, and creating the virtual local area network interface information based on the first packet comprises:
creating, based on the identifier of the one virtual local area network interface in the first packet, the one virtual local area network interface on a physical ethernet port that receives the first packet; or
creating, based on the identifiers of the plurality of virtual local area network interfaces in the first packet, the plurality of virtual local area network interfaces on a physical ethernet port that receives the first packet.

15. The method according to any one of claims 12 to 14, wherein the virtual local area network interface information comprises a first virtual local area network interface, the first virtual local area network interface is any interface in the virtual local area network interface information, and the first information comprises first information corresponding to the first virtual local area network interface;
receiving the first information based on the virtual local area network interface information comprises:
receiving the first information corresponding to the first virtual local area network on the first virtual local area network interface; and
generating the first address information based on the first information comprises:
generating address information of the first virtual local area network interface in the first address information based on the first information corresponding to the first virtual local area network interface; or obtaining address information of the first virtual local area network interface from the first information corresponding to the first virtual local area network interface.

16. The method according to any one of claims 12 to 15, wherein
the virtual local area network interface information comprises one virtual local area network interface, and the first address information comprises address information of the one virtual local area network interface; or
the virtual local area network interface information comprises a plurality of virtual local area network interfaces, and the first address information comprises address information of the plurality of virtual local area network interfaces.

17. The method according to any one of claims 12 to 16, wherein receiving the first information based on the virtual local area network interface information comprises:
receiving a router advertisement packet on the created virtual local area network interface, wherein the router advertisement packet comprises the first information, and the first information comprises network segment information; and
generating the first address information based on the first information comprises:
generating the first address information based on the network segment information in the first information.

18. The method according to claim 17, wherein before receiving the router advertisement packet on the created virtual local area network interface, the method further comprises:
sending a router solicitation packet on the created virtual local area network interface.

19. The method according to any one of claims 12 to 16, wherein receiving the first information based on the virtual local area network interface information comprises:
sending a dynamic host configuration protocol request on the created virtual local area network interface; and
receiving a dynamic host configuration protocol response on the created virtual local area network interface, wherein the dynamic host configuration protocol response comprises the first information, and the first information comprises the first address information; and
generating the first address information based on the first information comprises:
obtaining the first address information from the first information in the dynamic host configuration protocol response.

20. The method according to any one of claims 12 to 19, wherein the method further comprises:
sending an address of a service plane in the first address information to a network management device.

21. The method according to any one of claims 12 to 20, wherein the method further comprises:
receiving an address of a service plane in second address information of a second device from the network management device.

22. The method according to any one of claims 12 to 21, wherein the method further comprises:
establishing the link based on the address of the service plane in the first address information and the address of the service plane in the second address information of the second device.

23. A link establishment method, comprising:
receiving a second packet;
creating virtual local area network interface information based on the second packet; and
generating third address information and routing information, wherein the third address information corresponds to the virtual local area network interface information.

24. The method according to claim 23, wherein the second packet is the link layer discovery protocol packet, and the link layer discovery protocol packet comprises an identifier of one virtual local area network interface or identifiers of a plurality of virtual local area network interfaces; and creating the virtual local area network interface information based on the second packet comprises:
creating, based on the identifier of the one virtual local area network interface in the link layer discovery protocol packet, the one virtual local area network interface on a physical ethernet port that receives the link layer discovery protocol packet; or
creating, based on the identifiers of the plurality of virtual local area network interfaces in the link layer discovery protocol packet, the plurality of virtual local area network interfaces on a physical ethernet port that receives the link layer discovery protocol packet.

25. The method according to claim 23, wherein the second packet is a router advertisement packet, and
receiving the second packet comprises:
receiving one or more router advertisement packets, wherein a data link layer of the router advertisement packet carries an identifier of one virtual local area network interface; and
creating the virtual local area network interface information based on the second packet comprises:
creating, based on the identifier of the one virtual local area network interface carried by the data link layer of the router advertisement packet, the one virtual local area network interface on a physical ethernet port that receives the router advertisement packet.

26. The method according to any one of claims 23 to 25, wherein
the virtual local area network interface information comprises one virtual local area network interface, and the third address information comprises address information of the one virtual local area network interface; or
the virtual local area network interface information comprises a plurality of virtual local area network interfaces, and the third address information comprises address information of the plurality of virtual local area network interfaces.

27. The method according to any one of claims 23 to 26, wherein generating the third address information and the routing information comprises:
sending a dynamic host configuration protocol request to a third device on the created virtual local area network interface;
receiving a dynamic host configuration protocol response on the created virtual local area network interface;
obtaining the third address information from the dynamic host configuration protocol response; and
using a default gateway address in the dynamic host configuration protocol response as a gateway address of the routing information.

28. The method according to any one of claims 23 to 26, wherein the second packet is the router advertisement packet, and generating the third address information and the routing information comprises:
generating the third address information based on the second packet; and
generating the routing information based on the second packet.

29. The method according to claim 28, wherein the second packet comprises network segment information, and generating the third address information based on the second packet comprises:
generating the third address information based on the network segment information in the second packet.

30. The method according to claim 28 or 29, wherein generating the routing information based on the second packet comprises:
using a source address of the second packet as a gateway address of the routing information.

31. The method according to any one of claims 28 to 30, wherein before receiving the second packet, the method further comprises:
sending a router solicitation packet.

32. The method according to any one of claims 23 to 31, wherein the method further comprises:
sending an address of a service plane in the third address information to a network management device.

33. The method according to any one of claims 23 to 32, wherein the method further comprises:
receiving an address of a service plane in fourth address information of a fourth device from the network management device.

34. The method according to any one of claims 23 to 33, wherein the method further comprises:
establishing the link based on the address of the service plane in the third address information and the address of the service plane in the fourth address information of the fourth device.

35. A link establishment method, comprising:
obtaining an address of a service plane of a first apparatus; and
sending the address of the service plane of the first apparatus to a second apparatus, wherein there is a correspondence between the first apparatus and the second apparatus.

36. The method according to claim 35, wherein the correspondence between the first apparatus and the second apparatus is preconfigured.

37. The method according to claim 35 or 36, wherein obtaining the address of the service plane of the first apparatus comprises:
receiving the address of the service plane of the first apparatus from the first apparatus.

38. The method according to any one of claims 35 to 37, wherein the method further comprises:
obtaining an address of a service plane of the second apparatus; and
sending the address of the service plane of the second apparatus to the first apparatus.

39. The method according to claim 38, wherein obtaining the address of the service plane of the second apparatus comprises:
receiving the address of the service plane of the second apparatus from the second apparatus.

40. The method according to any one of claims 35 to 39, wherein the method further comprises:
obtaining configuration information of the first apparatus and configuration information of the second apparatus.

41. A communication apparatus, comprising a unit configured to perform the method according to any one of claims 1 to 11, or comprising a unit configured to perform the method according to any one of claims 12 to 22, or comprising a unit configured to perform the method according to any one of claims 23 to 34, or comprising a unit configured to perform the method according to any one of claims 35 to 40.

42. A communication apparatus, comprising a processor and a memory, wherein the memory is configured to store a computer program, and the processor is configured to invoke and run the computer program stored in the memory, to perform the method according to any one of claims 1 to 11, or the method according to any one of claims 12 to 22, or the method according to any one of claims 23 to 34, or the method according to any one of claims 35 to 40.

43. A chip, comprising: a processor, configured to invoke computer instructions from a memory and run the computer instructions, so that a device in which the chip is installed performs the method according to any one of claims 1 to 11, or the method according to any one of claims 12 to 22, or the method according to any one of claims 23 to 34, or the method according to any one of claims 35 to 40.

44. A computer-readable storage medium, configured to store computer program instructions, wherein the computer program enables a computer to perform the method according to any one of claims 1 to 11, or the method according to any one of claims 12 to 22, or the method according to any one of claims 23 to 34, or the method according to any one of claims 35 to 40.

45. A computer program product, comprising computer program instructions, wherein the computer program instructions enable a computer to perform the method according to any one of claims 1 to 11, or the method according to any one of claims 12 to 22, or the method according to any one of claims 23 to 34, or the method according to any one of claims 35 to 40.
